# EUROPÄISCHE PATENTSCHRIFT

(11) **EP 4 227 024 B1**
(45) Veröffentlichungstag und Bekanntmachung des Hinweises auf die Patenterteilung: **14.05.2025**
(21) Anmeldenummer: 23155451.0
(22) Anmeldetag: 07.02.2023
(51) Int. Cl.: B23K 9/173, B22F 7/06, B22F 7/08, B22F 10/25, B22F 10/66, B30B 9/02, B30B 9/12, B30B 9/14, B33Y 10/00, B33Y 40/20, B33Y 80/00, C02F 11/125, B23K 9/04, B23K 26/342, B22F 5/08

(54) **FÖRDERSCHNECKE FÜR EINEN SCHNECKENSEPARATOR UND HERSTELLUNGSVERFAHREN FÜR EINE FÖRDERSCHNECKE**
SCREW CONVEYOR FOR SCREW SEPARATOR AND PRODUCTION METHOD FOR SCREW CONVEYOR
VIS TRANSPORTEUSE POUR SÉPARATEUR À VIS SANS FIN ET PROCÉDÉ DE FABRICATION DE VIS TRANSPORTEUSE

(30) Priorität: 10.02.2022 DE 202022100751 U
(43) Veröffentlichungstag der Anmeldung: 16.08.2023
(73) Patentinhaber: Vogelsang GmbH & Co. KG, 49632 Essen (DE)
(72) Erfinder: Hartogh, Peter, 49632 Essen (DE); Vogelsang, Hugo, 49632 Essen (DE)
(74) Vertreter: Eisenführ Speiser

(56) Entgegenhaltungen:
- EP-A1- 3 766 619
- EP-B1- 3 427 937
- DE-A1- 102006 002 016
- DE-A1- 102017 103 068
- US-A1- 2020 282 622

## Beschreibung

Die Erfindung betrifft eine Förderschnecke, insbesondere für eine Separatorvorrichtung zur Entwässerung feuchter Massen, und eine Separatorvorrichtung zur Entwässerung feuchter Massen. Ferner betrifft die Erfindung ein Verfahren zur additiven Herstellung einer Förderschnecke sowie eine Verwendung einer Förderschnecke in einer Separatorvorrichtung.

Förderschnecken werden in verschiedenen Bereichen zum Fördern unterschiedlicher Güter, beispielsweise in Schneckenförderern oder Separatorvorrichtungen, verwendet.

Separatorvorrichtungen mit Förderschnecken werden insbesondere zum Entwässern feuchter Massen, beispielsweise zum Entwässern von Gülle oder Gärresten, eingesetzt. Eine solche Separatorvorrichtung ist beispielsweise aus DE 10 2006 052 669 A1 bekannt. Hierbei rotiert die Förderschnecke in einem Zylindersieb und presst hierdurch den Flüssiganteil einer zu entwässernden Masse durch das Zylindersieb. Für eine effiziente Filterung ist eine gute Anlage des Umfangs der Förderschnecke an dem Zylindersieb zwecks Abdichtung und Siebreinigung angestrebt. Zwecks Vermeidung von Verstopfungen der Sieböffnungen ist ein möglichst dünnwandiges Zylindersieb vorteilhaft. Bei Schneckenseparatoren dieser Bauart tritt jedoch Verschleiß am Außenumfang der Schneckenflügel und am Zylindersieb auf, der zum Einbruch der Durchsatzleistung führen kann.

Aus der DE 10 2006 002 016 A1 ist eine Separatorvorrichtung bekannt, bei der eine Förderschnecke am äußeren Umfang Oberflächen unregelmäßigkeiten aufweist. Aus der DE 10 2008 048 091 A1 ist eine Separatorvorrichtung bekannt, bei der ein Räumelement zwei zueinander parallel angeordnete Rotorelemente umfasst, zwischen dessen Außenkanten ein Klemmspalt ausgebildet ist. In diesem Klemmspalt können sich Faserstoffe verfangen, die eine Abdichtung zwischen Förderschnecke und einem die Förderschnecke umgebenden Zylindersieb und ein Freiräumen der Öffnungen des Zylindersiebs bewirken. Zwar kann hierdurch eine verbesserte Räumung der Sieböffnungen erreicht werden, ein Nachteil dieser Separatorvorrichtung besteht jedoch darin, dass eine hohe Reibung zwischen den im Klemmspalt aufgenommenen Faserstoffen und der Innenwand des um die Rotorelemente angeordnetem Zylindersiebs auftritt. Dies kann zu einem unerwünschten hohen Verschleiß des Zylindersiebs führen und ferner eine erhöhte Antriebsenergie zum Überwinden der Reibung erforderlich machen.

DE 10 2017 103 068 A1 offenbart eine Vollmantelschneckenzentrifugen-Schnecke mit einer Schneckennabe. Die Schneckennabe weist einen zylindrischen Längsabschnitt auf, der als Rohr mittels eines herkömmlichen Verfahrens hergestellt wird. Die Schneckennabe weist ferner einen kegelstumpfförmigen Längsabschnitt auf, der mittels formgebendem Aufbauschweißen hergestellt ist.

Der Erfindung liegt daher die Aufgabe zugrunde eine verbesserte Lösung bereitzustellen, welche wenigstens eines der genannten Probleme adressiert. Insbesondere ist es Aufgabe der Erfindung, eine Lösung bereitzustellen, die den Wartungsaufwand sowie die im Betrieb auftretenden Reibungsenergieverluste einer Separatorvorrichtung reduziert.

Gemäß einem ersten Aspekt wird die eingangs genannte Aufgabe gelöst durch eine Förderschnecke nach Anspruch 1, ein Verfahren zur Herstellung einer Förderschnecke nach Anspruch 9 und eine Verwendung einer Förderschnecke nach Anspruch 18.

Solche Faserstoffe können beispielsweise durch in Gülle enthaltenem Stroh oder Silage gebildet werden, wenn die Separatorvorrichtung zur Separierung von Gülle eingesetzt wird.

Unter einer Separatorvorrichtungen ist insbesondere ein Pressschneckenseparator zu verstehen. Die Begriffe Pressschneckenseparator und Schneckenseparator sind vorzugsweise synonym zu verstehen. Separatorvorrichtungen werden insbesondere zur Entwässerung feuchter Massen, beispielsweise Gülle oder Gärreste, eingesetzt. Separatorvorrichtungen sind insbesondere ausgebildet zum Trennen von festen und flüssigen Bestandteilen feuchter Massen. Dabei kann von der feuchten Masse Flüssigkeit durch eine Siebvorrichtung abgetrennt werden, sodass der Flüssigkeitsgehalt der feuchten Masse deutlich reduziert wird.

Die Welle ist vorzugsweise nicht in einem nicht-additiven Herstellungsverfahren hergestellt. Sie kann beispielsweise konventionell spanend aus einem Halbzeug hergestellt werden, wobei das Halbzeug gegossen, geschmiedet oder stranggezogen sein kann. Die Welle ist vorzugsweise als Hohlwelle ausgebildet. Vorzugsweise weist die Welle eine Verbindungsstelle, vorzugsweise umfassend eine Nut auf, die ausgebildet ist, um eine Antriebswelle mit der Welle drehfest zu verbinden. Der Außenumfang der Welle ist vorzugsweise zylindrisch oder im Wesentlichen zylindrisch ausgebildet. In alternativen Ausgestaltungen kann sich der Außenumfang der Welle in Förderrichtung vergrößern, beispielsweise um eine Verdichtung zu erreichen. Ebenso kann in alternativen Ausgestaltungen vorgesehen sein, dass sich die Umhüllende des/der Schneckenflügel(s) sich in Förderrichtung verjüngt und das Sieb eine entsprechend hierzu kongruente Innenumfangsfläche aufweist.

Erfindungsgemäß ist vorgesehen, dass die Welle metallisches Material, vorzugsweise Stahl, insbesondere rostfreien Stahl, umfasst oder daraus besteht. Die Rotationsachse verläuft vorzugsweise in axialer Richtung. Die Welle kann drehbar in einer Separatorvorrichtung gelagert werden, sodass die Welle um die Rotationsachse drehbar ist.

Der Schneckenflügel erstreckt sich vorzugsweise gewindeartig und/oder schraubenartig um die Welle herum, wobei der Schneckenflügel eine bestimmte Steigung aufweist, wobei die Steigung entlang des Schneckenflügels konstant oder nicht konstant sein kann. Unter wendelartig ist insbesondere gewindeartig und/oder schraubenartig zu verstehen. Eine nicht konstante Steigung kann insbesondere bevorzugt sein, wenn in axialer Richtung eine anwachsende Verdichtung einer zu fördernden Masse und/oder ein anwachsender axialer Druck auf eine zu fördernde Masse erreicht werden soll. Vorzugsweise erstreckt sich der Schneckenflügel in axialer Richtung entlang eines axialen Teilabschnitts der Welle oder in axialer Richtung entlang der gesamten Welle. Der Schneckenflügel ist vorzugsweise umlaufend, insbesondere entlang der gesamten axialen Erstreckung des Schneckenflügels, stoffschlüssig mit der Welle verbunden.

Unter der Außenkante des Schneckenflügels ist insbesondere die Außenumfangsfläche des Schneckenflügels zu verstehen. Die Außenkante verläuft vorzugsweise am radial äußeren Umfang des Schneckenflügels und weist eine, vorzugsweise konstante, Breite auf.

In der Außenkante sind vorzugsweise mehrere als Vertiefungen ausgebildete Ausnehmungen angeordnet. Die einzelnen Ausnehmungen können insbesondere taschenförmig und/oder nutförmig ausgebildet sein. Es ist bevorzugt, dass die Ausnehmungen voneinander beabstandet angeordnet sind. Vorzugsweise sind die Ausnehmungen im Wesentlichen gleich ausgebildet. Vorzugsweise ist der Abstand zwischen den Ausnehmungen im Wesentlichen gleich groß. Die Ausnehmungen sind vorzugsweise ausgebildet, um Feststoffe, insbesondere faserförmige Feststoffe, aufzunehmen. Eine Ausnehmung kann dabei als Nut oder Vertiefung ausgebildet sein. Eine Ausnehmung kann eine konstante oder abnehmende Breite über ihre Tiefenerstreckung aufweisen, in bevorzugten Ausführungsformen weist eine Ausnehmung aber einen Hinterschnitt in solcher Weise auf, dass der in der Außenkante liegende Öffnungsquerschnitt der Ausnehmung abschnittsweise oder insgesamt kleiner ist als ein in der Tiefe der Ausnehmung liegender Ausnehmungsquerschnitt, sodass sich in der Ausnehmung Faserstoffe besonders wirksam und dauerhaft verfangen können.

In den Ausnehmungen können sich insbesondere Faserstoffe aufbauen, wobei die Faserstoffe in den Ausnehmungen hängen bleiben und mit der Förderschnecke in einer Rotationsbewegung am äußeren Umfang der Förderschnecke in einer kreisförmigen Umlaufbahn bewegt werden. Mit den Faserstoffen in den Ausnehmungen bildet sich vorzugsweise eine Art Bürstenoberfläche am Außenumfang der Förderschnecke, die mit einer Siebvorrichtung der Separatorvorrichtung in Berührung ist und die Siebvorrichtung überstreicht, sodass die Siebvorrichtung ständig durch die Bürstenoberfläche gereinigt wird. Die Faserstoffe, die in den Ausnehmungen vorhanden sind erneuern sich vorzugsweise ständig und selbständig, sodass eine dauerhafte und gründliche Reinigung der Siebvorrichtung gewährleistet werden kann.

Der Schneckenflügel ist eine additiv gefertigte metallische Struktur. Als additive Fertigung wird der punkt-, schicht- oder portionsweise Aufbau eines Bauteils verstanden, bei dem durch Aushärtung und Verbindung in einem anhand der Produktgeometriedaten gesteuerten selektiven Auftragsverfahren ein aushärtbares Material zu dem Bauteil verbunden wird. Die Aushärtung kann beispielsweise durch Aufschmelzung und nachfolgende Erstarrung oder durch eine Vernetzungsreaktion erfolgen. Die punkt-, schicht- oder portionsweise Fertigung ist dem Bauteil anhand entsprechender Strukturen in einem Schliffbild oder auf unbehandelten Oberflächen anzusehen.

Durch die additive Fertigung wird einerseits ermöglicht, eine Außenkante an dem Schneckenflügel auszubilden, die ausreichend breit ist, um darin Ausnehmungen anzuordnen, die diese Faserfangwirkung erreichen. Zum anderen wird durch die additive Fertigung ermöglicht, dass die Ausnehmungen unmittelbar im additiven Fertigungsprozess hergestellt werden, sodass eine Ausbildung mit mehreren Ausnehmungen zeitsparend möglich ist, ohne dass hierfür ein nachgeschalteter, spanender Bearbeitungsvorgang erforderlich wäre. So können die sich aus dem additiven Fertigungsverfahren möglichen Geometrien der Förderschnecke vorteilhaft für eine verbesserte funktionelle Struktur der Förderschnecke genutzt werden. Vorteilhaft wird daher die verbesserte Geometrie der Förderschnecke mit Ausnehmungen durch das vorgeschlagene additive Fertigungsverfahren hergestellt: Von der Erfindung umfasst ist aber auch eine im additiven Fertigungsverfahren hergestellte Förderschnecke ohne solche Ausnehmungen; die sich durch andere geometrische Merkmale auszeichnet; beispielsweise das nachfolgend erläuterte sich einwärts verjüngende Querschnittsprofil der Schneckenflügel oder andere nachfolgend erläuterte Fortbildungsmerkmale.

Die erfindungsgemäße Förderschnecke kann eine effiziente und günstige Fertigungsstrategie erreichen, indem die Welle effizient und präzise in einem konventionellen verfahren vorgefertigt werden kann und der Schneckenflügel in individueller und spezifischer Geometrie auf der Welle als Substratelement additiv aufgebaut und hergestellt wird.

Gemäß einer ersten bevorzugten Ausführungsform weist der Schneckenflügel ein Querschnittsprofil mit einer Breite im Bereich des Außenumfangs des Schneckenflügels und einer Breite im Bereich des Innenumfangs des Schneckenflügels auf und die Breite im Bereich des Außenumfangs des Schneckenflügels ist größer als die Breite im Bereich des Innenumfangs des Schneckenflügels. Als Querschnittsprofil soll hier ein Schnitt durch den Schneckenflügel verstanden werden, beispielsweise in einer senkrecht zur Rotationsachse der Förderschnecke liegenden Ebene oder senkrecht zur Flankenfläche des Schneckenflügels. Das Querschnittsprofil ist vorzugsweise derart ausgebildet, dass im Bereich des Innenumfangs des Schneckenflügels die Breite des Schneckenflügels geringer ist als im Bereich des Außenumfangs des Schneckenflügels. Insbesondere ist der Querschnitt derart ausgebildet, dass der Schneckenflügel von radial innen nach radial außen in radialer Richtung breiter, vorzugsweise stetig breiter, wird. Darunter ist insbesondere zu verstehen, dass der Schneckenflügel im Bereich des Außenumfangs des Schneckenflügels breiter ausgeführt ist als im Bereich des Innenumfangs bzw. der Schneckenflügel im Bereich des Innenumfangs des Schneckenflügels eine geringere Breite aufweist, als im Bereich des Außenumfangs.

Der Schneckenflügel weist vorzugsweise ein Querschnittsprofil auf, das in radialer Richtung nach außen hin, vorzugsweise stetig, breiter werdend ausgebildet ist.

Es ist besonders bevorzugt, wenn das Querschnittsprofil des Schneckenflügels mindestens einen Abschnitt mit konstanter Breite und mindestens einen Abschnitt mit sich verändernder, insbesondere nach radial außen größer werdenden, Breite aufweist. Diese Abschnitte können insbesondere in radialer Richtung zueinander benachbart sein.

Gemäß einer bevorzugten Ausführungsform ist der Querschnitt derart ausgebildet, dass der Schneckenflügel von radial innen nach radial außen in radialer Richtung einen inneren Abschnitt mit konstanter Breite aufweist und/oder einen mittleren Abschnitt mit nach außen ansteigender Breite aufweist und/oder einen äußeren Abschnitt mit konstanter Breite aufweist.

Der Schneckenflügel ist vorzugsweise derart gestaltet, dass nahe der Rotationsachse des Schneckenflügels, bzw. bei geringeren Radien, weniger Material aufgetragen wird als bei größeren Radien. Im Bereich nahe der Rotationsachse kann ein Schichtaufbau daher auf vorteilhafte Weise schnell und somit kostengünstig erfolgen. Im Bereich fern der Rotationsachse bzw. bei größeren Radien kann eine breitere Struktur aufgetragen werden. Vorzugsweise sind in der breiten äußeren Struktur Faserstofftaschen angeordnet.

Eine solche Förderschnecke kann auf vorteilhafte Weise in einer Separatorvorrichtung eingesetzt werden, wobei eine im wartungsarme, servicefreundliche Entwässerung ermöglicht wird, beispielsweise bei einer Gülle- oder Gärrestaufbereitung.

Eine hier beschriebene Förderschnecke kann jedoch auch in einem Schneckenförderer oder einer anderen Vorrichtung, die nicht zur Entwässerung feuchter Massen dient, verwendet werden.

Ein Vorteil einer solchen Förderschnecke besteht darin, dass aufgrund der mehreren voneinander beabstandeten Ausnehmungen keine durchgängige Ausnehmung vorhanden ist und dadurch Reibverluste, die aufgrund von Reibung zwischen in den Ausnehmungen vorhandenen Feststoffen und einer Siebvorrichtung, die bei einer Separatorvorrichtung um die Förderschnecke herum angeordnet ist, verringert werden. Dadurch kann der Verschleiß einer solchen Siebvorrichtung reduziert werden. Somit kann auch die Lebensdauer der verwendeten Bauteile erhöht und die Wartungsfrequenz verringert werden. Außerdem ist aufgrund reduzierter Reibverluste eine geringere Antriebsenergie für den Antrieb der Förderschnecke notwendig, wodurch der Energiebedarf der Separatorvorrichtung insgesamt reduziert werden kann.

Ein weiterer Vorteil einer solchen Förderschnecke besteht darin, dass mittels des radial nach außen breiter werdenden Querschnitts des Schneckenflügels eine erhebliche Materialeinsparung erzielt werden kann. Dadurch ist weniger Material für den Schneckenflügel notwendig, wodurch die Materialkosten für die Förderschnecke reduziert werden können.

Außerdem kann die Förderschnecke so durch den geringeren Materialeinsatz ein im Vergleich zu herkömmlichen Förderschnecken verringertes Gewicht aufweisen, wodurch insbesondere Wartungsvorgänge erleichtert werden können.

Typischerweise wird im Betrieb der Förderschnecke der Außenumfang der Schneckenflügel mechanisch stark beansprucht und die Außenkante der Förderschnecke ist typischerweise der am stärksten von Verschleiß betroffene Bereich der Förderschnecke. Aufgrund der Ausführung des Schneckenflügels, bei der der Schneckenflügel im Bereich des Außenumfangs breiter als im Bereich des Innenumfangs des Schneckenflügels ausgeführt ist, kann der Verschleiß durch den hohen Materialauftrag im äußeren Bereich und die dadurch breite Außenkante kompensiert werden. Hierdurch kann einerseits ein axial längerer aber radial größerer Spalt zur Innenwandung des Schnecken- oder Siebrohres ausgebildet werden, wodurch eine geringere Flächenlast zwischen Außenkante des Schneckenflügels und Sieb auftritt und der Verschleiß auf beiden Seiten reduziert wird. Somit weist die Förderschnecke und das Schnecken- oder Siebrohr eine vorteilhafte erhöhte Lebensdauer auf.

Gemäß einer besonders bevorzugten Ausführungsform ist der Schneckenflügel eine durch eine drahtbasierte additive Fertigung mittels Lichtbogenschweißen, insbesondere mittels Metallschutzgasschweißen (MSG), vorzugsweise mittels Metall-Inertgas-Schweißen (MIG) und/oder Metall-Aktivgas-Schweißen (MAG) hergestellte Struktur.

Der Schneckenflügel weist dann insbesondere die bei einer drahtbasierten additiven Fertigung mittels Lichtbogenschweißen typische Struktur auf. Vorzugsweise wird der Schneckenflügel mittels Lichtbogendrahtauftragsschweißen erhalten. Besonders bevorzugt wird das Verfahren "Wire Arc Additive Manufacturing (WAAM)" verwendet, worunter insbesondere eine Art 3D-Druck für Metallstrukturen mittels Schweißverfahren zu verstehen ist. Es ist bevorzugt, dass Lichtbogenschweißen zum schichtweisen Aufbau des Bauteils verwendet wird, wobei ein Metalldraht mithilfe eines Schweißbrenners an der richtigen Stelle verschmolzen wird, dass so das gewünschte Rohteil geformt wird. Minimal wird für eine Fertigung komplexer Strukturen hierbei eine dreiachsige Bewegung benötigt, um einerseits das Bauteil zu drehen, andererseits den Schweißkopf in axialer und radialer Richtung zu verfahren. Durch eine drehbare Bauplattform in Verbindung mit Schwenkachsen der Bauplattform oder des Schweißkopfes kann der Materialaufbau auch beispielsweise 5-achsig bis 8-achsig erfolgen. So können komplexe Strukturen mit Hohlräumen, insbesondere in Form von Ausnehmungen, gefertigt werden. Ein derartig fertig aufgebautes Bauteil kann anschließend, beispielsweise wenn bestimmte Anforderungen an die Oberflächen gestellt werden, durch eine mechanische Nachbearbeitung, wie beispielsweise CNC-Fräsen, nachbearbeitet werden.

Unter Lichtbogenschweißen ist insbesondere ein Schweißverfahren zu verstehen, bei dem ein elektrischer Lichtbogen (Schweißlichtbogen) zwischen Werkstück und einer Elektrode brennt, die abschmelzen kann und dann gleichzeitig als Zusatzwerkstoff dient.

Unter Schutzgasschweißen ist insbesondere ein Schweißverfahren zu verstehen, bei dem Schutzgase verwendet werden, die die Elektrode und die Schmelze umströmen. Die Zufuhr der Schutzgase kann dabei im Brenner integriert sein. Beim Metallschutzgasschweißen (MSG) kann eine Elektrode abgeschmolzen werden, die aus demselben oder ähnlichem Werkstoff wie das Werkstück besteht. Unter Metall-Inertgas-Schweißen (MIG) ist insbesondere eine Form des Metallschutzgasschweißens zu verstehen, bei der inerte Gase verwendet werden, die keine chemischen Reaktionen mit der Schmelze eingehen. Unter Metall-Aktivgas-Schweißen (MAG) ist insbesondere eine Form des Metallschutzgasschweißens zu verstehen, bei der reaktionsfreudige Gase verwendet werden, um die Zusammensetzung der Schmelze bewusst zu verändern. Die Zudosierung eines solchen Aktivgases ermöglicht beispielsweise eine lokal selektive Eigenschaftsänderung am Schneckenflügel, beispielsweise kann hierdurch der Bereich der Außenkante oder der Bereich der fördernden Flanke des Schneckenflügels mit einer größeren Materialhärte ausgeführt werden als radial weiter innen liegende Bereiche des Schneckenflügels, die zähere Materialeigenschaften aufweisen.

Ein Vorteil eines solchen additiv gefertigten Schneckenflügels besteht darin, dass ein erwarteter Verschleiß an bestimmten Stellen, beispielsweise im Bereich der fördernden Flanke, insbesondere an der fördernden Flanke, besonders an der in Förderrichtung letzten Flanke, des Schneckenflügels, mehr Material aufgetragen werden kann und/oder ein härteres und/oder verschleißresistenteres, insbesondere höherwertigeres, Material im Vergleich zum im Übrigen verwendeten Material verwendet werden kann. Ein Auftragen von metallischen Bahnen, die verschiedene Materialien umfassen oder daraus bestehen, bietet den Vorteil, dass verschiedene Materialien für verschiedene Bereiche des Schneckenflügels verwendet werden können, wobei die Materialien an die für diese Bereiche jeweils definierten Anforderungen angepasst sind.

Gemäß einer bevorzugten Ausführungsform ist der Schneckenflügel schichtförmig aufgebaut ist, erhalten durch: Auftragen mehrerer metallischer Bahnen mittels Abschmelzen eines Metalldrahts, wobei die Bahnen parallel zueinander angeordnet sind und entlang der Gewindeverlaufsrichtung des Schneckenflügels verlaufen.

Vorzugsweise werden Metallbahnen mittels Auftragsschweißen auf die Welle aufgebracht. Das Auftragsschweißen kann dabei automatisiert erfolgen. Es können mehrere metallische Bahnen parallel nebeneinander aufgetragen werden. Die Bahnen verlaufen dabei auf vorteilhafte Weise in Gewindeverlaufsrichtung des Schneckenflügels.

Es ist bevorzugt, dass der Schneckenflügel schichtförmig aufgebaut ist, erhalten durch: Auftragen einer metallischen Bahn mittels Abschmelzen eines Metalldrahts, wobei die Bahn vorzugsweise entlang der Gewindeverlaufsrichtung des Schneckenflügels verläuft, und vorzugsweise Auftragen mindestens einer weiteren Bahn, die parallel zu der aufgetragenen Bahn angeordnet ist und in einer Schicht mit der zuvor aufgetragenen Bahn angeordnet ist, Bestimmen der Höhe der aufgetragenen Bahn in radialer Richtung, Auftragen einer metallischen Bahn mittels Abschmelzen eines Metalldrahts in einer radial über der bereits aufgetragenen Bahn liegenden Schicht, wobei die Positionen an denen der Metalldraht zum Auftragen dieser Bahn abgeschmolzen wird in Abhängigkeit von der zuvor bestimmten Höhe der aufgetragenen Bahn erfolgt, und vorzugsweise Auftragen mehrerer in radialer Richtung übereinander angeordneter Schichten mit jeweils mindestens einer Bahn bis eine Soll-Höhe erreicht und/oder überschritten wird, wobei vorzugsweise vor dem Auftragen jeder neuen Schicht die Höhe mindestens einer Bahn der zuvor aufgetragenen Schicht in radialer Richtung bestimmt wird.

Es ist ferner bevorzugt, dass die Förderschnecke mehrere, vorzugsweise zwei, Schneckenflügel aufweist, die in Umfangsrichtung versetzt zueinander, insbesondere 180° versetzt zueinander, angeordnet sind und so einen Schneckengang zwischen sich ausbilden. In diesem Fall bildet ein Schneckenflügel zwischen zwei seiner Schneckenwindungen dann zwei Schneckengänge aus. Eine Schnecke mit einem schraubenförmig umlaufenden Schneckenflügel bildet somit eine eingängige Schnecke aus, eine Schnecke mit zwei Schneckenflügeln eine zweigängige Schnecke und allgemein eine Schnecke mit n Schneckenflügeln eine n-gängige Schnecke aus. Wobei zu verstehen ist, dass die Steigung der Schnecke dem n-fachen der Teilung der Schnecke entspricht.

Die Schneckenflügel und die Schneckengänge sind vorzugsweise gleichförmig ausgebildet sind, wobei vorzugsweise jeder der Schneckenflügel eine Mehrzahl von Ausnehmungen in der Umfangsaußenkante des Schneckenflügels aufweist, die in Umfangsrichtung voneinander entlang der Umfangsaußenkante des Schneckenflügel beabstandet sind. Die Ausnehmungen eines Schneckenflügels sind zudem vorzugsweise in axialer Richtung versetzt zu den Ausnehmungen eines anderen Schneckenflügels angeordnet.

Die Förderschnecke ist vorzugsweise mehrgängig, vorzugsweise zweigängig, ausgebildet. Insbesondere ist es bevorzugt, dass der die Förderschnecke mehrgängig ausgebildet ist und somit mehrere Schneckenflügel aufweist. Die Förderschnecke ist vorzugsweise zweigängig, ausgebildet, sodass die Förderschnecke mehrere, vorzugsweise zwei, Schneckenflügel aufweist, die vorzugsweise die gleiche Form aufweisen und in Umfangsrichtung 180° versetzt zueinander angeordnet sind. Unter einer zweigängigen Ausführung ist insbesondere zu verstehen, dass die Förderschnecke zwei Schneckenflügel aufweist.

Bei einer zweigängigen Förderschnecke beginnt bei 180° ein neuer Schneckenflügel, bei einer dreigängigen Förderschnecke dementsprechend jede 120°. Die Anfänge der Schneckenflügel liegen also um 180° bzw. 120° versetzt zueinander.

Weiter ist es bevorzugt, dass in dem Schneckenflügel in Umfangsrichtung innerhalb eines Winkelbereichs von 360° mindestens eine Ausnehmung angeordnet ist, vorzugsweise mindestens zwei Ausnehmungen angeordnet sind, besonders bevorzugt mindestens drei Ausnehmungen angeordnet sind.

360° entspricht dabei insbesondere einer vollen Umdrehung um die Rotationsachse.

Die Anzahl der Ausnehmungen beträgt vorzugsweise mindestens oder genau zwei, besonders bevorzugt mindestens oder genau drei, bei jedem vorhandenen Schneckenflügel je voller Umdrehung. Die Gesamtzahl der Ausnehmungen an einem Schneckenflügel kann durch Multiplikation der Anzahl der Ausnehmungen je voller Umdrehung mit der Anzahl der Umdrehungen des Schneckenflügels bestimmt werden.

Besonders bevorzugt ist es, wenn die Ausnehmungen jeweils eine Längserstreckung entlang einer Ausnehmungslängsachse aufweisen, wobei die Ausnehmungslängsachse schräg, insbesondere mit einem Winkel von mindestens 2,5° oder mindestens 5°, vorzugsweise mindestens 10°, zu der Gewindeverlaufsrichtung des Schneckenflügels ausgerichtet ist. Dabei ist die Ausnehmungslängsachse vorzugsweise derart schräg zu der Gewindeverlaufsrichtung des Schneckenflügels ausgerichtet, dass die Ausnehmungslängsachse im Vergleich zur Gewindeverlaufsrichtung des Schneckenflügels weiter, insbesondere mit einem Winkel von mindestens 5°, vorzugsweise mindestens 10°, relativ zur Gewindeverlaufsrichtung, in Richtung der axialen Richtung ausgerichtet ist.

Unter einer solchen Ausgestaltung ist insbesondere zu verstehen, dass die Längserstreckung der Ausnehmungen im Vergleich zu der Gewindeverlaufsrichtung des Schneckenflügels weiter in Richtung der axialen Richtung ausgerichtet ist.

Mit einer solchen schrägen Anordnung der Ausnehmungen kann auf vorteilhafte Weise erreicht werden, dass im Vergleich zu einer Anordnung der Ausnehmungen in Gewindeverlaufsrichtung weniger Ausnehmungen und/oder kürzere Ausnehmungen ausreichend sind, um mit den Ausnehmungen bei Rotation des Schneckenflügels um die Rotationsachse einen von den Ausnehmungen aufgespannten Zylinder vollständig und ohne Unterbrechungen zu überstreichen.

Ferner besteht ein Vorteil einer solchen schrägen Anordnung der Ausnehmungen darin, dass die Reinigungswirkung einer Siebvorrichtung eines Separators aufgrund dieser schrägen Anordnung im Vergleich zu einer nicht schrägen Anordnung verbessert ist.

Noch weiter ist es bevorzugt, dass die Ausnehmungen jeweils eine Länge in Gewindeverlaufsrichtung des Schneckenflügels und eine Breite in Breitenrichtung des Schneckenflügels aufweisen und die Länge mindestens doppelt so groß ist wie die Breite, wobei vorzugsweise die Länge der Ausnehmungen mindestens halb so lang, vorzugsweise mindestens gleich lang ist, wie der Abstand zwischen den Ausnehmungen.

Die Länge der Ausnehmungen und der Abstand zwischen den Ausnehmungen sind vorzugsweise so gewählt, dass bei einer vollen Umdrehung der Förderschnecke um die Rotationsachse jeder Punkt einer von dem Außenumfang des Schneckenflügels aufgespannten Rotationsfläche von mindestens einer der Ausnehmungen überstrichen wird.

Ein Vorteil von derartig ausgebildeten und angeordneten Ausnehmungen besteht darin, dass bei einem Einsatz der Förderschnecke in einer Separatorvorrichtung die Innenwandung der Siebvorrichtung, welche die Rotationsfläche darstellt, von den in den Ausnehmungen aufgenommenen Feststoffen vollständig überstrichen werden kann. Dadurch kann eine permanente Reinigung der Siebvorrichtung mittels der Feststoffe erzielt werden und ein Verstopfen von Flüssigkeitsdurchlässen in der Siebvorrichtung vermieden werden.

Die Ausnehmungen sind vorzugsweise in Umfangsrichtung auf dem Schneckenflügel in einem gleichmäßigen Abstand zueinander angeordnet. Vorzugsweise ist der Abstand zwischen den benachbarten Ausnehmungen gleich groß.

Vorzugsweise weisen die Ausnehmungen jeweils eine Öffnung in der Außenkante des Schneckenflügels auf, wobei die Öffnung eine Kontur mit mehreren, vorzugsweise mindestens zwei spitzen Winkeln, vorzugsweise mit einem Winkel geringer als 90°, besonders bevorzugt mit einem Winkel geringer als 60°, aufweist.

Die Ausnehmungen weisen vorzugsweise an der Außenumfangsfläche des Schneckenflügels Öffnungen auf und bilden taschenförmige Materialaussparungen in dem Schneckenflügel. Die Öffnungen weisen vorzugsweise mehrere, insbesondere spitzwinklige Kanten auf. Mit solchen spitzwinkligen Kanten können Feststoffe besonders bevorzugt von den Ausnehmungen aufgenommen und während der Rotationsbewegung, insbesondere mittels Einklemmen von faserförmigen Feststoffen, in den Ausnehmungen gehalten werden.

Weiter ist es bevorzugt, dass das Querschnittsprofil des Schneckenflügels mindestens einen, vorzugsweise zwei, negative Flankenwinkel aufweist.

Unter einem Flankenwinkel ist dabei insbesondere der Winkel zwischen einer Seitenfläche, die insbesondere als Flanke bezeichnet werden kann, und einer senkrecht zur Rotationsachse liegenden Ebene zu verstehen. Der Flankenwinkel kann sowohl auf der Förderseite als auch auf der hierzu gegenüberliegenden Seite des Schneckenflügels negativ sein. Bei einem negativen Flankenwinkel wird der Querschnitt des Schneckenflügels in radialer Richtung nach außen hin breiter. Im Gegensatz zu einem solchen negativen Flankenwinkel weisen Schraubengewinde in der Regel positive Flankenwinkel (häufig zwischen 30° und 60°) auf. Es ist besonders bevorzugt, wenn der negative Flankenwinkel einen Winkelbetrag von mindestens 5°, vorzugsweise mindestens 10°, besonders bevorzugt mindestens 15°, aufweist. Solche Flankenwinkel können bei korrekt gewählten Schweißparametern noch mit einer Düsenlängsachse des Schweißkopfes ausgeführt werden, die senkrecht zur Rotationsachse bzw. zur Umfangsfläche der Welle liegt. Durch Verschwenken der Düsenlängsachse werden auch größere Flankenwinkel möglich.

Es ist besonders bevorzugt, wenn der Flankenwinkel nicht konstant ist, insbesondere in einem Abschnitt negativ ist und in mindestens einem Abschnitt, vorzugsweise in zwei Abschnitten, 0° beträgt. Unter einem Flankenwinkel von 0° ist insbesondere eine genau in radialer Richtung verlaufende Flanke zu verstehen, die also in einer senkrecht zur Rotationsachse verlaufenden Ebene liegt.

Vorzugsweise weist der Schneckenflügel einen Innendurchmesser und einen Außendurchmesser auf und der Schneckenflügel ist im Bereich des Außendurchmessers breiter als im Bereich des Innendurchmessers ausgebildet. Vorzugsweise ist der Schneckenflügel im Bereich des Außendurchmessers mindestens um einen Faktor von 1,5 breiter, besonders bevorzugt mindestens doppelt so breit, wie im Bereich des Innendurchmessers ausgebildet.

Eine solche nach außen hin breiter werdende Struktur kann mittels additivem Herstellungsverfahren besonders vorteilhaft hergestellt werden. Eine Herstellung einer solchen Struktur wäre hingegen fertigungstechnisch aufwändig und es wäre bei einem spanenden Verfahren ein sehr viel höherer Materialverbrauch notwendig und bei einem Gussverfahren eine aufgrund der Hinterschneidungen komplexe Form erforderlich.

Es ist weiter bevorzugt, dass die Förderschnecke eine Umhüllende aufweist, die sich von einem ersten Ende der Förderschnecke zu einem zweiten Ende der Förderschnecke hin verjüngt, vorzugsweise konisch verjüngt. Eine solche Förderschnecke kann besonders vorteilhaft in einem additiven Verfahren hergestellt werden. Die sich verjüngende Außenkontur profitiert dabei von der Abdichtung durch Ausnehmungen, die eine Fertigung der Außenkante mit größeren Toleranzen erlaubt. Durch die sich verjüngende Außenkontur kann die Förderschnecke in einem entsprechend sich verjüngenden Siebrohr eingesetzt werden und ermöglicht dann eine axiale Nachstellung zwecks Verschleißkompensation.

Gemäß einem weiteren Aspekt wird die eingangs genannte Aufgabe gelöst durch eine Förderschnecke, insbesondere für eine Separatorvorrichtung zur Entwässerung feuchter Massen, umfassend eine Welle, die sich in axialer Richtung entlang einer Rotationsachse erstreckt, einen Schneckenflügel, der wendelartig um die Welle verlaufend angeordnet ist, an dem Außenumfang der Welle mit der Welle verbunden ist, und sich in axialer Richtung entlang mindestens eines Abschnitts der Welle erstreckt, wobei der Schneckenflügel eine additiv gefertigte metallische Struktur, vorzugsweise erhalten durch eine drahtbasierte additive Fertigung mittels Lichtbogenschweißen, insbesondere mittels Metallschutzgasschweißen (MSG), vorzugsweise mittels Metall-Inertgas-Schweißen (MIG) und/oder Metall-Aktivgas-Schweißen (MAG), ist und/oder wobei der Schneckenflügel schichtförmig aufgebaut ist, erhalten durch: Auftragen mehrerer metallischer Bahnen mittels Abschmelzen eines Metalldrahts, wobei die Bahnen parallel zueinander angeordnet sind und entlang der Gewindeverlaufsrichtung des Schneckenflügels verlaufen.

Besonders bevorzugte Ausführungsformen einer solchen Förderschnecke sind im Zusammenhang mit den anderen hier beschriebenen Aspekten, insbesondere mit dem ersten Aspekt, ausgeführt. Diese bevorzugten Merkmale und bevorzugten Ausführungsformen stellen auch im Zusammenhang mit diesem Aspekt bevorzugte Merkmale und bevorzugte Ausführungsformen dar.

Gemäß einem weiteren Aspekt wird die eingangs genannte Aufgabe gelöst durch eine Separatorvorrichtung zur Entwässerung feuchter Massen, insbesondere Gülle und/oder Gärresten, umfassend eine drehbar um eine Antriebsdrehachse gelagerte Antriebswelle, eine Förderschnecke nach mindestens einem der vorhergehenden Ansprüche, wobei die Förderschnecke mit der Antriebswelle zur Drehmomentübertragung von der Antriebswelle auf die Förderschnecke verbunden ist, eine Siebvorrichtung, welche mindestens einen Teil der Förderschnecke umschließt, wobei die Siebvorrichtung zur Entwässerung der feuchten Masse eine flüssigkeitsdurchlässige Siebwand aufweist.

Die Antriebswelle erstreckt sich vorzugsweise entlang der Rotationsachse und ist um die Rotationsachse drehbar gelagert. Die Antriebswelle ist vorzugsweise drehfest mit der Welle gekoppelt, sodass die Antriebswelle ein Drehmoment auf die Welle übertragen kann. Die Welle kann so mittels Drehmomentübertragung von der Antriebswelle angetrieben werden, sodass sich die Welle um die Rotationsachse dreht. Die Siebvorrichtung weist eine flüssigkeitsdurchlässige Siebwand auf, welche derartig ausgebildet ist, dass Flüssigkeiten durch die flüssigkeitsdurchlässige Siebwand hindurchtreten können. Feststoffe, insbesondere Feststoffe mit einer bestimmten Mindestpartikelgröße, können hingegen nicht durch die flüssigkeitsdurchlässige Siebwand hindurchtreten. Somit können feuchte Massen entwässert werden, indem ein Flüssigkeitsanteil der feuchten Massen durch die Siebvorrichtung hindurchtritt und die entwässerten feuchten Massen, welche normalerweise eine gewisse Restfeuchtigkeit aufweisen, in axialer Richtung von der Förderschnecke aus der Separatorvorrichtung herausgeführt werden.

Die Separatorvorrichtung kann vorzugsweise mit einer Förderschnecke mit sich in axialer Richtung verjüngender Umhüllenden ausgerüstet sein, wobei dann vorzugsweise die Siebvorrichtung sich von einem ersten Ende zu einem zweiten Ende erstreckt und eine um die Antriebsdrehachse rotationssymmetrische Innenwand aufweist, deren Innendurchmesser sich von dem ersten Ende zu dem zweiten Ende hin ebenfalls verjüngt, vorzugsweise konisch verjüngt, wobei vorzugsweise die Förderschnecke mittels eine Axialverstellvorrichtung relativ zu der Siebvorrichtung axial verstellbar ist. Dies ermöglicht eine Nachstellung der Förderschnecke zur Verschleißkompensation.

Gemäß einem weiteren Aspekt wird die eingangs genannte Aufgabe gelöst durch ein Verfahren nach Anspruch 9.

Unter einer additiven Herstellung ist insbesondere eine Herstellung mit einem Fertigungsverfahren zu verstehen, bei dem Material Schicht für Schicht aufgetragen wird und so ein dreidimensionaler Gegenstand erzeugt wird.

Die Welle kann eine additiv hergestellte Welle oder eine nicht additiv hergestellte Welle sein. Die Förderschnecke wird hier auch dann als additiv hergestellt bezeichnet, wenn lediglich ein Teil der Förderschnecke, insbesondere der Schneckenflügel, additiv hergestellt wird und beispielsweise die Welle ein nicht additiv hergestelltes Bauteil ist. Die Welle ist vorzugsweise ein nicht additiv hergestelltes Bauteil.

Die Welle weist vorzugsweise eine Verbindungsstelle zur Verbindung mit einer Antriebswelle auf, damit insbesondere von einer Antriebswelle ein Drehmoment auf die Welle übertragen werden kann und die Welle so um die Rotationsachse in Rotationsbewegung versetzt werden kann.

Der Schneckenflügel wird vorzugsweise additiv gefertigt und somit schichtweise aufgebaut. Die metallischen Schichten werden vorzugsweise aufgetragen, indem ein Metalldraht mit einem Schweißgerät abgeschmolzen wird und das geschmolzene Metall dann an einer vorgegebenen Position erstarrt. Auf diese Weise kann eine kontinuierliche metallische Bahn aufgetragen werden. Es ist bevorzugt, wenn mehrere Bahnen, beispielsweise zwei Bahnen, parallel verlaufend nebeneinander auf die Oberfläche der Welle gewindeförmig aufgetragen werden. Diese parallel verlaufenden Bahnen bilden eine erste Schicht. Vorzugsweise wird auf dieser ersten Schicht auf die gleiche Weise eine zweite Schicht aufgetragen, wobei die zweite Schicht ebenfalls mehrere parallel verlaufende Bahnen umfasst. Anschließend wird vorzugsweise eine dritte Schicht, und bevorzugt weitere Schichten, mit jeweils mehreren parallel verlaufenden Bahnen aufgetragen. Es ist besonders bevorzugt, wenn die Bahnen in den unterschiedlichen Schichten alle zueinander parallel verlaufend angeordnet sind.

Es ist besonders bevorzugt, wenn die Anzahl der Bahnen pro Schicht nach radial außen hin zumindest zwischen zwei der Schichten, vorzugsweise zwischen mehreren der Schichten, zunimmt. Dadurch kann eine Verbreiterung der Querschnittsstruktur des Schneckenflügels in radialer Richtung nach außen hin erreicht werden.

Ein besonderer Vorteil eines solchen Verfahrens zur Fertigung einer Förderschnecke liegt darin begründet, dass keine Kühlung während des additiven Auftragens der Bahnen erforderlich ist, da die Bahnen gewindeförmig nacheinander aufgetragen werden und somit genug Zeit zum Erstarren und Abkühlen des aufgetragenen Material gegeben ist, bevor im gleichen Bereich erneut Material aufgetragen wird.

Es ist bevorzugt, wenn mehrere Schneckenflügel, insbesondere zwei versetzt zueinander angeordnete Schneckenflügel auf der Welle nach diesem Verfahren aufgebaut werden. Vorzugsweise sind die Schneckenflügel gleichförmig ausgebildet.

Erfindungsgemäß wird der Schneckenflügel derart schichtweise aufgebaut, dass der Schneckenflügel an dem Außenumfang des Schneckenflügels mehrere voneinander beabstandete Ausnehmungen zum Aufnehmen von, insbesondere faserhaltigen, Feststoffen aufweist.

Erfindungsgemäß werden die Ausnehmungen in dem Schneckenflügel gebildet, indem beim schichtweisen Auftrag metallischer Bahnen im Bereich der Ausnehmungen der Materialauftrag unterbrochen wird. Somit können die Ausnehmungen direkt beim schichtweisen Auftrag der metallischen Bahnen in den Schneckenflügel eingebracht werden, ohne dass es eines separaten Fertigungsschritts und/oder eines nachträglichen Abtragens von bereits aufgebrachtem Material zum Einbringen von Ausnehmungen bedarf. Durch ein mittels Unterbrechung einiger der metallischen Bahnen eingebrachten Ausnehmungen kann die Form der Ausnehmungen verbessert und/oder individuellen Anforderungen entsprechend erfolgen. Zum Einbringen der Ausnehmungen ist damit nicht zwingend ein Materialabtrag notwendig. Dadurch kann auch auf vorteilhafte Weise die Fertigung der Förderschnecke vereinfacht werden und die Anzahl der Fertigungsschritte für die Herstellung der Förderschnecke reduziert werden.

Es ist besonders bevorzugt, dass der Schneckenflügel derart schichtweise aufgebaut wird, dass der Schneckenflügel ein Querschnittsprofil mit einer Breite im Bereich des Außenumfangs des Schneckenflügels und einer Breite im Bereich des Innenumfangs des Schneckenflügels aufweist und die Breite im Bereich des Außenumfangs des Schneckenflügels größer ist als die Breite im Bereich des Innenumfangs des Schneckenflügels.

Vorzugsweise werden in einer Schicht, insbesondere in der ersten Schicht, im Bereich des Innenumfangs des Schneckenflügels weniger parallel nebeneinander angeordnete Metallbahnen aufgebracht als in einer der radial weiter außen liegenden Schichten, insbesondere als in der radial äußersten Schicht, im Bereich des Außenumfangs des Schneckenflügels.

Es ist besonders bevorzugt, dass das Verfahren folgende Schritte umfasst: Bestimmen der Höhe einer bereits aufgetragenen Bahn in radialer Richtung, Auftragen einer metallischen Bahn mittels Aufschmelzen eines Metallmaterials wie eines Metalldrahts in einer radial über der bereits aufgetragenen Bahn liegenden Schicht, wobei die Positionen an denen das Metallmaterial zum Auftragen dieser Bahn aufgeschmolzen wird in Abhängigkeit von der zuvor bestimmten Höhe der bereits aufgetragenen Bahn eingestellt wird, und vorzugsweise Auftragen mehrerer in radialer Richtung übereinander angeordneter Schichten mit jeweils mindestens einer Bahn bis eine Soll-Höhe erreicht und/oder überschritten wird, wobei vorzugsweise vor dem Auftragen jeder neuen Schicht die Höhe mindestens einer Bahn der zuvor aufgetragenen Schicht in radialer Richtung bestimmt wird.

Beim Auftragen der metallischen Bahnen kann das Fließ- und Erstarrungsverhalten des aufgebrachten Materials abhängig von Umgebungsbedingungen, insbesondere abhängig von der Umgebungstemperatur und/oder der Temperatur der Welle, sein. Somit kann insbesondere die Form der aufgetragenen Bahnen abhängig von den Umgebungsbedingungen sein. Insbesondere die Höhe in radialer Richtung der aufgetragenen Bahnen kann durch die Umgebungsbedingungen beeinflusst werden, sodass insbesondere bei unterschiedlichen Umgebungsbedingungen die aufgetragenen Bahnen unterschiedliche Höhen aufweisen können.

Ein Vorteil der sich durch ein solches Bestimmen der Höhe einer bereits aufgetragenen Bahn in radialer Richtung ergibt, besteht darin, dass eine Bahn in einer über einer aufgetragenen Bahn angeordneten Schicht in Abhängigkeit der bestimmten Höhe der aufgetragenen Bahn positioniert aufgetragen werden kann. Dadurch kann der Auftrag von übereinander angeordneten Bahnen derart erfolgen, dass die Bahnen in radialer Richtung in der gewünschten Höhe über den bereits aufgebrachten Bahnen aufgebracht werden. Eine zu hohe oder zu niedrige Positionierung des Metalldrahts beim Abschmelzen des Metalldrahts kann auf vorteilhafte Weise vermieden werden. Der Metalldraht kann dann auch bei unterschiedlichen Umgebungsbedingungen in der richtigen Positionierung, insbesondere in radialer Richtung in der richtigen Höhe abgeschmolzen werden.

Die Anzahl der Schichten kann vorgegeben sein. Es ist jedoch bevorzugt, dass eine Soll-Höhe in radialer Richtung vorgegeben ist und die Anzahl der Schichten sich ergibt, sobald mit einer Schicht die Soll-Höhe erreicht und/oder überschritten wird. Dadurch kann auf vorteilhafte Weise erreicht werden, dass unabhängig davon, wie die von den Umgebungsbedingungen abhängige Höhe der aufgetragenen Bahnen ausfällt, die vorgegebene Höhe der Schneckenflügel erreicht wird.

Weiter ist es bevorzugt, dass das Bestimmen der Höhe der aufgetragenen Bahn in radialer Richtung mittels folgender Schritte erfolgt: Aufsetzen einer Oberfläche eines Schweißkopfes oder eines aus einem Schweißkopf vorstehenden Metalldrahts, der eine bekannte Länge aufweist, auf eine Referenzebene, Auftragen einer metallischen Bahn mittels Abschmelzen des Metalldrahts, gegebenenfalls erneutes Aufsetzen des aus dem Schweißkopf vorstehenden Metalldrahts auf die Referenzebene zur Bestimmung der Länge des Metalldrahts, Aufsetzen der Oberfläche des Schweißkopfes oder des Metalldrahts auf die Oberfläche der aufgetragenen Bahn und Detektion des Aufsetzens der Oberfläche des Schweißkopfes oder des Metalldrahts auf der Oberfläche, insbesondere durch Erfassung einer Kontaktkraft oder Erfassen einer elektrischen Verbindung zwischen der Oberfläche des Schweißkopfes oder dem Metalldraht und der aufgetragenen Bahn, Bestimmen der Position der Oberfläche der aufgetragenen Bahn in Abhängigkeit von der Position des Schweißkopfes beim Aufsetzen der Oberfläche des Schweißkopfes oder des Metalldrahts auf die aufgetragene Bahn und gegebenenfalls von der Länge des Metalldrahts.

Grundsätzlich kann durch Aufsetzen einer Oberfläche des Schweißkopfes auf eine Oberfläche einer geschweißten Bahn in stets wiederholbarer Weise die geometrische Position der Oberfläche der geschweißten Bahn ermittelt werden und folglich die Höhe der geschweißten Bahn in radialer Richtung bestimmt werden. Mittels Aufsetzen eines aus einem Schweißkopf vorstehenden Metalldrahts, der eine bekannte Länge aufweist, auf der Referenzebene, kann durch Detektieren eines Stromflusses beim Aufsetzen die Position des eines aus dem Schweißkopf vorstehenden Metalldrahts bestimmt werden, sodass insbesondere die Position des Schweißkopfes, in dem der Metalldraht gehalten wird, für die Fertigung bekannt ist. Mit der bekannten Position des Drahts kann dann eine Bahn mit vorgegebenen Positionsdaten aufgetragen werden. Nach dem Auftragen der metallischen Bahn kann dann erneut der Metalldraht auf die Referenzebene aufgesetzt werden, wobei zum Beispiel bei Detektion eines Stromflusses der Kontakt des Metalldrahts zur Referenzebene detektiert und somit die - nun nach Durchführung des Schweißvorgangs möglicherweise veränderte - Länge des Metalldrahts anhand einer Positionsbestimmung des Schweißkopfs bestimmt werden kann. Es ist besonders bevorzugt, wenn die Höhe der aufgetragenen metallischen Bahn anschließend dadurch erfolgt, dass der Metalldraht auf die Oberfläche der aufgetragenen Bahn aufgesetzt wird und das Aufsetzen des Metalldrahts auf der Oberfläche, insbesondere durch Erfassung einer Kontaktkraft oder Erfassen einer elektrischen Verbindung zwischen dem Metalldraht und der aufgetragenen Bahn, detektiert wird,. Insbesondere beim Aufsetzen des Metalldrahts auf die aufgetragene Bahn kann aufgrund der bekannten Länge des Metalldrahts und der bekannten Position des Schweißkopfs die Höhe der aufgetragenen Bahn in radialer Richtung bestimmt werden.

Diese Verfahrensschritte zur Bestimmung der Höhe einer aufgetragenen metallischen Bahn können nach dem Auftragen jeder Bahn und/oder jeder Schicht und/oder in einer anderen Frequenz durchgeführt werden. In Abhängigkeit der bestimmten Höhe kann dann jeweils die Positionierung der nachfolgend aufzubringenden Bahn angepasst werden.

Noch weiter ist es bevorzugt, dass die Herstellung der Förderschnecke mittels drahtbasierter additiver Fertigung mittels Lichtbogenschweißen, insbesondere mittels Metallschutzgasschweißen (MSG), vorzugsweise mittels Metall-Inertgas-Schweißen (MIG) und/oder Metall-Aktivgas-Schweißen (MAG), mittels mindestens eines Schweißroboters erfolgt.

Es ist bevorzugt, dass mittels des Schweißroboters unter Verwendung digitaler Produktionsdaten die additive Fertigung des Schneckenflügels automatisiert erfolgt.

Noch weiter ist es bevorzugt, dass das Verfahren umfasst: Spanendes Abtragen von additiv aufgetragenem Material am Außenumfang des Schneckenflügels zur Verringerung der Rauigkeit des Schneckenflügels am Außenumfangs des Schneckenflügels und/oder zur Erzeugung einer geraden Außenkante am Außenumfang des Schneckenflügels, und vorzugsweise spanendes Abtragen von additiv aufgetragenem Material an den Flanken des Schneckenflügels zur Verringerung der Rauigkeit des Schneckenflügels an den Flanken des Schneckenflügels.

Vorzugsweise wird nach dem Auftragen der metallischen Bahnen eine mechanische Nachbearbeitung des additiv gefertigten Schneckenflügels durchgeführt. Mittels mechanischer Nachbearbeitung kann insbesondere die Oberflächenwelligkeit und/oder die Oberflächenrauigkeit reduziert werden. Insbesondere kann mittels einer solchen mechanischen Nachbearbeitung eine umlaufende und parallel zur axialen Richtung gerade Kante am Außenumfang des Schneckenflügels erzeugt werden.

Unter Flanken des Schneckenflügels sind insbesondere die seitlichen Außenflächen des Schneckenflügels zu verstehen.

Weiter ist es bevorzugt, dass die Welle in einer Halterung eingespannt ist und mittels Bewegung der Halterung bewegbar, insbesondere um die Rotationsachse drehbar, ist, und/oder der mindestens eine Schweißroboter mindestens sechs elektromechanisch angetriebene Achsen aufweist.

Es ist besonders bevorzugt, dass der schichtweise Aufbau des Schneckenflügels mittels Auftrag von parallel angeordneten Bahnen erfolgt, wobei die Bahnen entlang der Gewindeverlaufsrichtung des Schneckenflügels verlaufen, wobei vorzugsweise ein Teil der Bahnen entlang des gesamten Schneckenflügels jeweils durchgängig ausgebildet ist und/oder ein Teil der Bahnen jeweils im Bereich der Ausnehmungen Unterbrechungen aufweist und nicht entlang des gesamten Schneckenflügels durchgängig ausgebildet ist und/oder durch den Verlauf der Bahnen eine Ausnehmung gebildet wird.

Mittels eines solchen schichtweisen Aufbaus des Schneckenflügels können auf besonders vorteilhafte Weise Ausnehmungen durch Unterbrechungen der aufgetragenen Bahnen in die Struktur eingebracht werden. Dadurch sind insbesondere im Vergleich zur herkömmlichen Herstellung ähnlicher Ausnehmungen weniger Fertigungsschritte notwendig und für die Herstellung ist weniger Material erforderlich. Die einzelnen Bahnen können dabei beispielsweise so verlaufen, dass sie in einem ersten Bereich des Außenumfangs als einen Anzahl von N parallel liegende Bahnen verlaufen, demgegenüber aber in einem zweiten Bereich des Außenumfangs als eine Anzahl von N minus M parallel liegender Bahnen verlaufen, wobei M eine ganze Zahl von mindestens 1 ist. Dieser Unterschied der Anzahl parallel liegender Bahnen kann durch entsprechendes Beenden und Starten von Bahnen erzielt werden und führt zu der Bildung von Ausnehmungen im Außenumfang des Schneckenflügels. Erster und zweiter Abschnitt können dabei immer wechselweise entlang des Umfangs angeordnet sein. Vorzugsweise können dabei insbesondere in dem ersten Abschnitt zwei der Bahnen parallel verlaufen, von denen eine in Auftragsrichtung vor dem ersten Abschnitt gestartet wurde und/oder von denen eine in Auftragsrichtung hinter dem ersten Abschnitt beendet wurde. Weiter vorzugsweise kann eine Bahn sich über den ersten und den zweiten Abschnitt erstrecken und dabei in einem Übergangsabschnitt zwischen dem ersten und dem zweiten Abschnitt einen schräg zur parallelen Richtung ausgerichteten verlauf aufweisen. Hierdurch wird eine exakte Umgrenzung eines Ausschnitts möglich. Weiterhin wird eine vorteilhafte Ausschnittskontur mit einem oder zwei spitzen Winkeln erreicht, was zu einer vorteilhaften Verfangen von Fasern in der Ausnehmung führt.

Weiter ist es bevorzugt, dass die Anzahl der parallel verlaufenden Bahnen im Bereich des Innendurchmessers des Schneckenflügels geringer ist als die Anzahl der parallel verlaufenden Bahnen im Bereich des Außendurchmessers des Schneckenflügels.

Es ist bevorzugt, dass die Anzahl der Bahnen pro Schicht in radialer Richtung nach Außen größer wird. Dadurch kann bei Bahnen mit im wesentlichen gleichem Querschnitt eine nach außen breiter werdende Struktur des Schneckenflügels erreicht werden.

Ferner ist es bevorzugt, dass das Verfahren folgende Schritte umfasst: Erstellen von Produktionsdaten für die Positionierung des Abschmelzens des Metalldrahts beim Aufbringen der Bahn, umfassend die Schritte: Erstellen einer digitalen Grundstruktur, die Querschnittsinformationen, insbesondere umfassend eine Soll-Höhe und eine von der Höhe abhängige Breite, eines Schneckenflügels abbildet, Replizieren der digitalen Grundstruktur in einer vorgegebenen Gewindebewegung, die der Gewindeform des Schneckenflügels entspricht.

Es ist bevorzugt, dass die digitale Grundstruktur Informationen über den Querschnitt des Schneckenflügels umfasst. Die Anzahl der Bahnen pro Schicht kann dann in Abhängigkeit von der Höhe der jeweiligen Schicht und der Breite des zu erzeugenden Querschnitts bei dieser Höhe, vorzugsweise während des Herstellungsprozesses, insbesondere mehrfach, beispielsweise für jede Schicht vor dem Fertigen jeder Schicht, bestimmt werden. Insbesondere kann sich die Anzahl der Schichten in Abhängigkeit von der Gesamthöhe des vorgegebenen Querschnitts ergeben. Ein Vergleich zwischen Soll- und Ist-Höhe kann vorzugsweise nach dem Fertigen einzelner Schichten, insbesondere nach dem Fertigen jeder der Schichten, durchgeführt werden.

Es ist besonders bevorzugt, dass die Geometrie der Förderschnecke in mathematischen Funktionen in einer Robotersteuerung programmiert wird. Vorzugsweise werden dabei mehrere Koordinatentransformationen durchgeführt, sodass jeder Punkt auf der Oberfläche der einzelnen Schneckenflügel über die Längs- und Querrichtung der Flügel angesprochen werden kann. Schwenk-, Dreh- und Achspositionen für einen Schweißroboter, der für die additive Fertigung vorgesehen ist, können durch die Koordinatentransformationen direkt berechnet werden. Vorzugsweise erfolgt eine Bahnplanung für die aufzubringenden metallischen Bahnen ausschließlich in Schneckenflügellängsrichtung und Schneckenflügelquerrichtung.

Es ist besonders bevorzugt, wenn die Bearbeitung bei einem bestimmten Minimalradius beginnt. Vorzugsweise verbreitert sich ab einem bestimmten Grenzradius der Schneckenflügel in Schneckenflügelquerrichtung, wobei der Bereich zwischen den begrenzenden Flanken automatisch gefüllt wird, wenn eine oder mehrere metallische Bahnen aufgetragen werden können. Vorzugsweise verbleibt ab einem weiteren bestimmten Grenzradius die Breite in Querrichtung konstant, wobei der Bereich zwischen den begrenzenden Flanken automatisch gefüllt, wenn eine oder mehrere metallische Bahnen aufgetragen werden können. Vorzugsweise werden ab einem bestimmten Radius die Schneckenflügel nicht mehr komplett gefüllt, sondern mit Ausnehmungen versehen. Hierzu wird vorzugsweise ein Algorithmus definiert, der für bestimmte Höhen und Positionen auf dem Schneckenflügel die Umrandungen von Ausnehmungen und Füllung derer Zwischenräume durchführt. Vorzugsweise wird die Bearbeitung abgeschlossen, sobald ein bestimmter Radius erreicht wird.

Es ist besonders bevorzugt die Schichten nacheinander vollständig aufzutragen, insbesondere zunächst eine Schicht vollständig aufzutragen und anschließend die nächste Schicht vollständig aufzutragen, um einen Wärmeeintrag möglichst gleichmäßig zu halten.

Gemäß einem weiteren Aspekt wird die eingangs genannte Aufgabe gelöst durch eine Verwendung einer Förderschnecke wie hier beschrieben, in einer Separatorvorrichtung, vorzugsweise einer Separatorvorrichtung wie hier beschrieben, zur Entwässerung feuchter Massen, insbesondere zur Entwässerung von Gärresten und/oder Gülle.

Die zuvor beschriebenen Aspekte und ihre jeweiligen möglichen Fortbildungen weisen Merkmale bzw. Verfahrensschritte auf, die sie insbesondere dafür geeignet machen, mit einem hier beschriebenen Verfahren und seinen Fortbildungen hergestellt zu werden.

Zu den Vorteilen, Ausführungsvarianten und Ausführungsdetails der verschiedenen Aspekte der hier beschriebenen Lösungen und ihrer jeweiligen möglichen Fortbildungen wird auch auf die Beschreibung zu den entsprechenden Merkmalen, Details und Vorteilen der jeweils anderen Aspekte und ihrer Fortbildungen verwiesen.

Bevorzugte Ausführungsbeispiele werden beispielhaft anhand der beiliegenden Figuren erläutert. Es zeigen:
- Fig. 1:: eine schematische perspektivische Darstellung eines Ausschnitts einer Förderschnecke mit zwei 180° zueinander versetzt angeordneten Schneckenflügeln, wobei nur ein Ausschnitt von einer halben Umdrehung der beiden Schneckenflügel gezeigt ist;
- Fig. 2:: eine schematische Seitenansicht des in Fig. 1 gezeigten Ausschnitts einer Förderschnecke mit zwei 180° zueinander versetzt angeordneten Schneckenflügeln;
- Fig. 3:: eine schematische Seitenansicht des in Fig. 1 gezeigten Ausschnitts einer Förderschnecke mit zwei 180° zueinander versetzt angeordneten Schneckenflügeln;
- Fig. 4:: eine schematische Ansicht in Richtung der Rotationsachse des in Fig. 1 gezeigten Ausschnitts einer Förderschnecke mit zwei 180° zueinander versetzt angeordneten Schneckenflügeln;
- Fig. 5a:: eine schematische Ansicht eines ersten Zwischenzustands einer Förderschnecke bei der Fertigung der Förderschnecke;
- Fig. 5b:: eine schematische Ansicht eines zweiten Zwischenzustands einer Förderschnecke bei der Fertigung der Förderschnecke;
- Fig. 5c:: eine schematische Ansicht eines dritten Zwischenzustands einer Förderschnecke bei der Fertigung der Förderschnecke;
- Fig. 6:: eine schematische Darstellung einer Separatorvorrichtung mit einer Förderschnecke;
- Fig. 7:: ein beispielhafter schematischer Ablauf eines Verfahrens zur additiven Herstellung einer Förderschnecke.

In den Figuren sind gleiche oder im Wesentlichen funktionsgleiche bzw. -ähnliche Elemente mit den gleichen Bezugszeichen bezeichnet. Gestrichelte, grau dargestellte Linien in den Figuren deuten insbesondere Konturen an, die von einem Bauteil verdeckt werden.

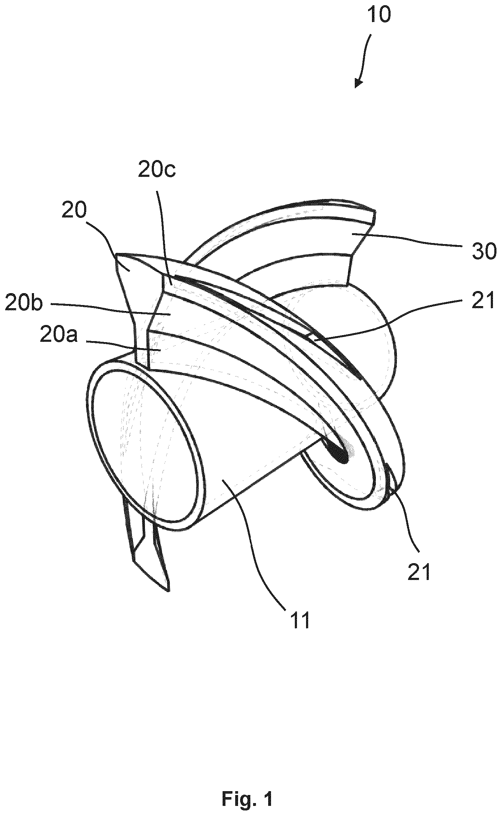

Fig. 1 zeigt eine schematische perspektivische Darstellung eines Ausschnitts einer Förderschnecke 10 mit zwei 180° zueinander versetzt angeordneten Schneckenflügeln 20, 30, wobei nur ein Ausschnitt von einer halben Umdrehung der beiden Schneckenflügel gezeigt ist. Eine hier beschriebene Förderschnecke kann insbesondere deutlich länger als in den hier gezeigten Abbildungen (in denen sie nur ausschnittsweise gezeigt wird) ausgebildet sein, wobei dann jeder Schneckenflügel mehrere Umdrehungen um die Welle 11 aufweist. Die Schneckenflügel sind gewindeartig auf der Welle 11 angeordnet und wurden mittels additiver Fertigung auf die Welle 11 schichtweise aufgebracht. Die Breite der Schneckenflügel 20,30 ist im Bereich des Innenumfangs der Schneckenflügel 20, 30 jeweils geringer als die Breite der Schneckenflügel 20, 30 im Bereich des Außenumfangs der Schneckenflügel 20, 30. Im Bereich des Außenumfangs weist der Schneckenflügel 20 mehrere voneinander beabstandete Ausnehmungen 21 auf. Der Schneckenflügel 30 weist ebenfalls mehrere voneinander beabstandete Ausnehmungen auf. Die Schneckenflügel weisen ein Querschnittsprofil mit einer Breite im Bereich des Außenumfangs 20c des Schneckenflügels 20 und einer Breite im Bereich des Innenumfangs 20a des Schneckenflügels 20 auf. Die Breite 20c im Bereich des Außenumfangs des Schneckenflügels ist dabei größer als die Breite 20a im Bereich des Innenumfangs des Schneckenflügels. Zwischen dem inneren und dem äußeren Bereich ist ein mittlerer Bereich 20b angeordnet, in dem der Querschnitt nach radial außen hin breiter werdend ausgebildet ist.

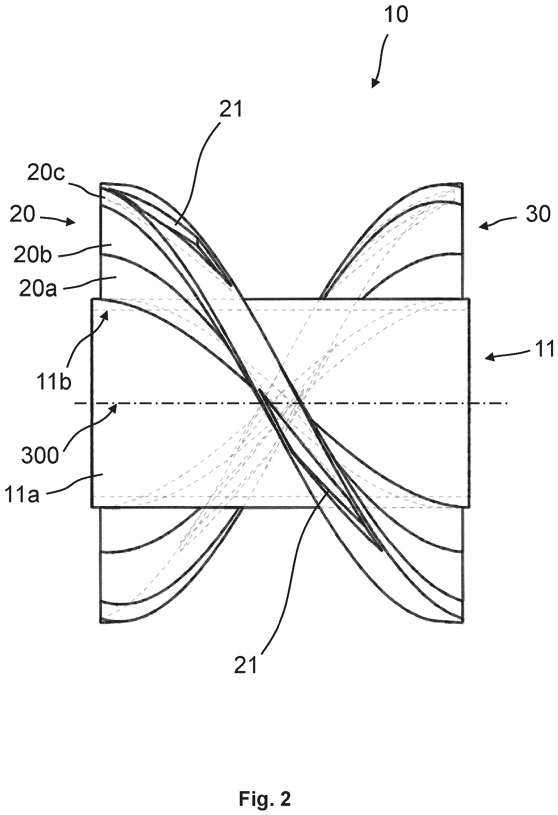

Fig. 2 zeigt eine schematische Seitenansicht des in Fig. 1 gezeigten Ausschnitts einer Förderschnecke mit zwei 180° zueinander versetzt angeordneten Schneckenflügeln 20, 30, die auf eine Welle 11 aufgebracht wurden. Die Welle 11 kann drehbar um eine sich axial erstreckende Rotationsachse 300 gelagert werden. Die Welle 11 ist zylinderförmig als Hohlwelle ausgebildet. Die Welle 11 weist dabei einen Außenumfang 11a und einen Innenumfang 11b (anhand einer grau gestrichelten Linie gezeigt) auf.

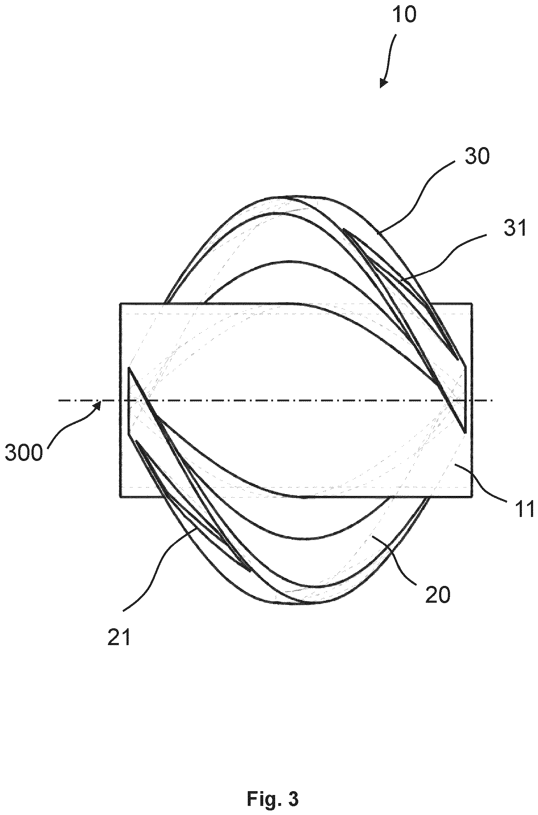

Fig. 3 zeigt eine schematische Seitenansicht des in Fig. 1-2 gezeigten Ausschnitts einer Förderschnecke mit zwei 180° zueinander versetzt angeordneten Schneckenflügeln 20, 30. Der dargestellte Ausschnitt ist der in Fig. 2 gezeigte Ausschnitt, wobei jedoch die Förderschnecke im Vergleich zur Darstellung in Fig. 2 um 90° um die Rotationsachse 300 gedreht ist.

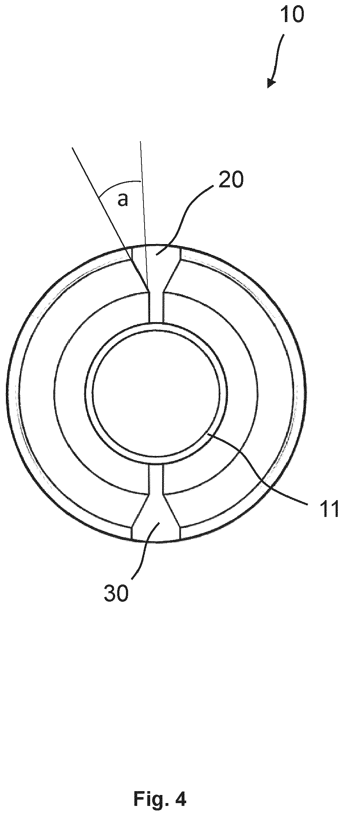

Fig. 4 zeigt eine schematische Ansicht in Richtung der Rotationsachse des in Fig. 1-3 gezeigten Ausschnitts einer Förderschnecke mit zwei 180° zueinander versetzt angeordneten Schneckenflügeln. Dabei ist der nach radial außen hin breiter werdende Querschnitt bzw. das breiter werdende Querschnittsprofil der Schneckenflügel 20, 30 zu erkennen.

Bei dem Schneckenflügel 20 ist der negative Flankenwinkel a in einem Bereich eingezeichnet. Der Bereich, in dem der Flankenwinkel a negativ ist, ist zwischen einem radial innerem und einem radial äußeren Bereich angeordnet, wobei in dem radial inneren und dem radial äußeren Bereich der Flankenwinkel nicht negativ ist, sondern 0° beträgt.

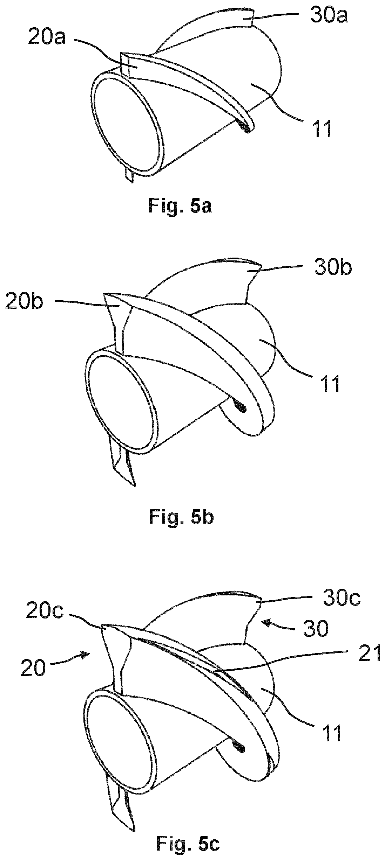

Fig. 5a zeigt eine schematische Ansicht eines ersten Zwischenzustands einer Förderschnecke bei der Fertigung der Förderschnecke. Auf der Welle sind die ersten Schichten 20a, 30a, die jeweils aus mehreren parallel angeordneten metallischen Bahnen bestehen, aufgebracht worden. Die Schichten sind dabei nach radial außen übereinander aufgebracht worden.

Fig. 5b zeigt eine schematische Ansicht eines zweiten Zwischenzustands einer Förderschnecke bei der Fertigung der Förderschnecke. Nach dem in Fig. 5a gezeigten Zustand wurden weitere Schichten 20b, 30b, die nach radial außen breiter werden, schichtweise aufgebracht.

Fig. 5c zeigt eine schematische Ansicht eines dritten Zwischenzustands einer Förderschnecke bei der Fertigung der Förderschnecke. Nach dem in Fig. 5b gezeigten Zustand wurden weitere Schichten 20c, 30c, die im Bereich des äußeren Umfangs der Schneckenflügel 20, 30 positioniert sind, schichtweise aufgebracht. Dabei wurden die metallischen Bahnen im Bereich der Ausnehmungen 21 beim Auftragen der metallischen Bahnen unterbrochen, sodass die Ausnehmungen beim additiven Herstellen der Schneckenflügel entstanden sind, ohne dass es notwendig ist, die Ausnehmungen nachträglich durch Fräsen oder andere mechanische Bearbeitung einzubringen.

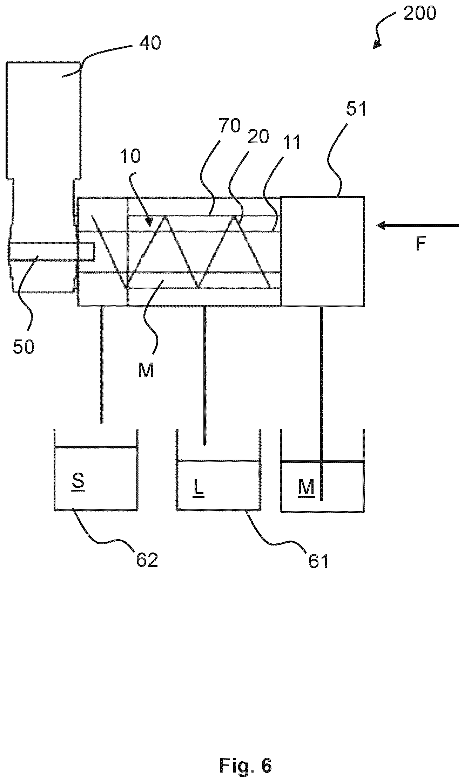

Fig. 6 zeigt eine schematische Schnittansicht einer bevorzugten Ausführungsform einer Separatorvorrichtung 200. Die Separatorvorrichtung 200 ist ausgebildet, eine feuchte Masse M zu entwässern, um eine entwässerte Masse S mit einem gewünschten Trockenmassegehalt bereitzustellen. Hierzu weist die Separatorvorrichtung 200 eine drehbar um eine Rotationsachse gelagerte Antriebswelle 50 auf, die sich in einer Axialrichtung erstreckt. Die Antriebswelle 50 wird von einer Motorwelle einer Antriebseinheit 40 angetrieben.

Zur Förderung der zu entwässernden feuchten Masse M in einer Förderrichtung F und zur Separierung der Flüssigkeit L von der zu entwässernden Masse M, um eine entwässerte Masse S mit einem gewünschten Trockenmassegehalt bereitzustellen, ist eine Förderschnecke 10 drehbar innerhalb einer Siebvorrichtung 70 angeordnet, so dass die Siebvorrichtung 70 die Förderschnecke 10 umschließt.

Die Förderschnecke 10 und die Siebvorrichtung 70 sind derart ausgebildet sind, dass die Förderschnecke 10 dicht an der Siebvorrichtung 70, insbesondere an einer Siebinnenfläche einer fluiddurchlässigen Siebwand der Siebvorrichtung 70, anliegt. Durch diese Anordnung wird die zu entwässernde feuchte Masse M über eine Einlasskammer 51 in Förderrichtung F zwischen der Förderschnecke 10 und der Siebvorrichtung 70 in Abhängigkeit von einem vorliegenden Förderdruck komprimiert. Dies bewirkt, dass die Flüssigkeit L aus der feuchten Masse M durch die fluiddurchlässige Siebwand der Siebvorrichtung gepresst wird. Die fluiddurchlässige Siebwand weist Austrittöffnungen auf, die sich zwischen der Siebinnenfläche der Siebwand, die der Förderschnecke 10 zugewandt ist, und einer in Bezug zu der Siebinnenfläche radial außenliegenden Siebaußenfläche der Siebwand, die von der Förderschnecke 10 abgewandt ist, erstrecken. Durch die Austrittöffnungen kann die von der feuchten Masse M separierte Flüssigkeit L aus der Siebvorrichtung 70 austreten und in einem Behälter 61 gesammelt werden. Die entwässerte Masse S tritt aus der Separatorvorrichtung aus und kann beispielsweise in einem Behälter 62 gesammelt werden.

Die Größe der Austrittsöffnungen ist dabei derart ausgebildet, dass die Flüssigkeit L, allerdings nicht die Feststoffe der feuchten Masse M durch die Siebwand aus der Siebvorrichtung 70 austreten können, so dass die Feststoffe der feuchten Masse M durch die Siebvorrichtung 70 bis zu einem Auslass geführt werden.

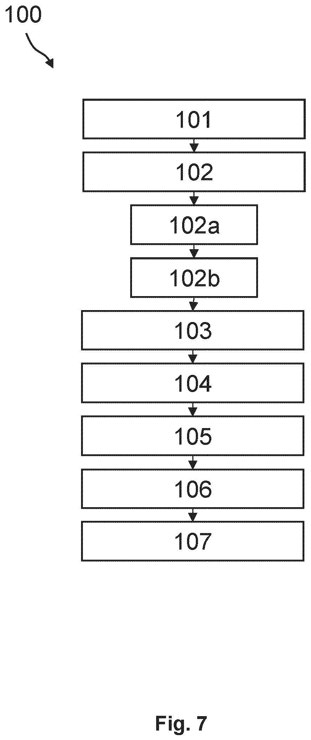

Fig. 7 ein beispielhafter schematischer Ablauf eines Verfahrens 100 zur additiven Herstellung einer Förderschnecke, wobei die Herstellung der Förderschnecke mittels drahtbasierter additiver Fertigung mittels Metallschutzgasschweißen (MSG) mittels eines Schweißroboters erfolgt, umfassend folgende Schritte:
In einem Schritt 101, Bereitstellen einer Welle, die sich in axialer Richtung entlang einer Rotationsachse erstreckt. In einem Schritt 102, Additive Fertigung eines Schneckenflügels auf der Welle durch schichtweisen Materialauftrag, umfassend die Schritte 102a, Auftragen einer metallischen Bahn mittels Abschmelzen eines Metalldrahts, wobei die Bahn vorzugsweise entlang der Gewindeverlaufsrichtung des Schneckenflügels verläuft, und 102b, Auftragen weiterer Bahnen, die parallel zu der aufgetragenen Bahn angeordnet sind. Dabei wird der Schneckenflügel derart schichtweise aufgebaut, dass der Schneckenflügel ein Querschnittsprofil mit einer Breite im Bereich des Außenumfangs des Schneckenflügels und einer Breite im Bereich des Innenumfangs des Schneckenflügels aufweist und die Breite im Bereich des Außenumfangs des Schneckenflügels größer ist als die Breite im Bereich des Innenumfangs des Schneckenflügels. Außerdem wird der Schneckenflügel derart schichtweise aufgebaut, dass der Schneckenflügel an dem Außenumfang des Schneckenflügels mehrere voneinander beabstandete Ausnehmungen zum Aufnehmen von, insbesondere faserhaltigen, Feststoffen aufweist.
In einem Schritt 103, Bestimmen der Höhe einer bereits aufgetragenen Bahn in radialer Richtung, wobei das Bestimmen der Höhe der aufgetragenen Bahn in radialer Richtung mittels folgender Schritte erfolgt: Aufsetzen des Metalldrahts, der eine bekannte Länge aufweist, auf eine Referenzebene, Auftragen einer metallischen Bahn mittels Abschmelzen des Metalldrahts, erneutes Aufsetzen des Metalldrahts auf die Referenzebene zur Bestimmung der Länge des Metalldrahts, Aufsetzen des Metalldrahts auf die aufgetragene Bahn, Bestimmen der Höhe der aufgetragenen Bahn in Abhängigkeit von der Position des Metalldrahts beim Aufsetzen des Metalldrahts auf die aufgetragene Bahn und von der Länge des Metalldrahts. Anhand der so möglichen Bestimmung der tatsächlichen Höhe einer aufgetragenen Schicht ist es auch möglich, eine Soll-Auftragshöhe vorzugeben und die zum Erreichen dieser Soll-Auftragshöhe notwendige Anzahl von Schichten zu berechnen.
In einem Schritt 104, Auftragen einer metallischen Bahn mittels Abschmelzen eines Metalldrahts in einer radial über der bereits aufgetragenen Bahn liegenden Schicht, wobei die Positionen an denen der Metalldraht zum Auftragen dieser Bahn abgeschmolzen wird in Abhängigkeit von der zuvor bestimmten Höhe der bereits aufgetragenen Bahn eingestellt wird. In einem Schritt 105, Auftragen mehrerer in radialer Richtung übereinander angeordneter Schichten mit jeweils mindestens einer Bahn bis eine Soll-Höhe erreicht und/oder überschritten wird, wobei vorzugsweise vor dem Auftragen jeder neuen Schicht die Höhe mindestens einer Bahn der zuvor aufgetragenen Schicht in radialer Richtung bestimmt wird.
In einem Schritt 106, Spanendes Abtragen von additiv aufgetragenem Material am Außenumfang des Schneckenflügels zur Verringerung der Rauigkeit des Schneckenflügels am Außenumfangs des Schneckenflügels und/oder zur Erzeugung einer geraden Außenkante am Außenumfang des Schneckenflügels. In einem Schritt 107, Spanendes Abtragen von additiv aufgetragenem Material an den Flanken des Schneckenflügels zur Verringerung der Rauigkeit des Schneckenflügels an den Flanken des Schneckenflügels.

### Bezugszeichenliste

- 10:: Förderschnecke
- 11:: Welle
- 11a:: Außenumfang der Welle
- 11b:: Innenumfang der Welle
- 20, 30:: Schneckenflügel
- 20a, 30a:: radial innerer Bereich des Schneckenflügels
- 20b, 30b:: radial zwischen dem inneren und dem äußeren Bereich liegender Bereich des Schneckenflügels
- 20c, 30c:: radial äußerer Bereich des Schneckenflügels
- 21, 31:: Ausnehmungen
- 40:: Antriebsmotor
- 50:: Antriebswelle
- 51:: Einlasskammer
- 61:: Flüssigkeitsbehälter
- 62:: Feststoffbehälter
- 70:: Siebvorrichtung
- 100:: Verfahren zur additiven Herstellung einer Förderschnecke
- 101-107:: Vefahrensschritte
- 200:: Separatorvorrichtung
- 300:: Rotationsachse
- a:: negativer Flankenwinkel
- F:: Förderrichtung
- M:: feuchte Masse
- S:: entwässerte Masse
- L:: Flüssigkeit

## Patentansprüche

1. Förderschnecke (10), insbesondere für eine Separatorvorrichtung (200) zur Entwässerung feuchter Massen, umfassend
- eine Welle (11), die sich in axialer Richtung entlang einer Rotationsachse (300) erstreckt und die vorzugsweise nicht in einem additiven Herstellungsverfahren hergestellt ist, wobei die Welle metallisches Material, vorzugsweise Stahl, insbesondere rostfreien Stahl, umfasst oder daraus besteht,
- einen Schneckenflügel (20, 30), der
∘ wendelartig um die Welle verlaufend angeordnet ist,
∘ an dem Außenumfang der Welle mit der Welle verbunden ist,
∘ und sich in axialer Richtung entlang mindestens eines Abschnitts der Welle erstreckt,
**dadurch gekennzeichnet, dass** der Schneckenflügel eine auf der Welle additiv gefertigte metallische Struktur ist und an dem Außenumfang eine Außenkante aufweist, in der mehrere voneinander beabstandete Ausnehmungen zum Aufnehmen von Faserstoffen angeordnet sind,
wobei die Ausnehmungen in dem Schneckenflügel gebildet werden, indem beim schichtweisen Auftrag metallischer Bahnen im Bereich der Ausnehmungen der Materialauftrag unterbrochen wird.

2. Förderschnecke nach dem vorhergehenden Anspruch,
**dadurch gekennzeichnet,**
**dass** der Schneckenflügel durch eine drahtbasierte additive Fertigung mittels Lichtbogenschweißen, insbesondere mittels Metallschutzgasschweißen (MSG), vorzugsweise mittels Metall-Inertgas-Schweißen (MIG) und/oder Metall-Aktivgas-Schweißen (MAG) hergestellt ist.

3. Förderschnecke nach mindestens einem der vorhergehenden Ansprüche,
**dadurch gekennzeichnet, dass** der Schneckenflügel schichtförmig aufgebaut ist, erhalten durch:
- Auftragen mehrerer metallischer Bahnen mittels Abschmelzen eines Metalldrahts, wobei die Bahnen vorzugsweise parallel zueinander angeordnet sind und entlang der Gewindeverlaufsrichtung des Schneckenflügels verlaufen.

4. Förderschnecke nach mindestens einem der vorhergehenden Ansprüche,
**dadurch gekennzeichnet, dass** die Förderschnecke mehrere, vorzugsweise zwei, Schneckenflügel (20, 30) aufweist, die in Umfangsrichtung versetzt zueinander, insbesondere 180° versetzt zueinander, angeordnet sind und vorzugsweise gleichförmig ausgebildet sind,
wobei vorzugsweise jeder der Schneckenflügel eine Mehrzahl von Ausnehmungen in Umfangsrichtung aufweist und die Ausnehmungen eines Schneckenflügels in axialer Richtung versetzt zu den Ausnehmungen eines anderen Schneckenflügels angeordnet sind,
und/oder
dass in dem Schneckenflügel in Umfangsrichtung innerhalb eines Winkelbereichs von 360° mindestens eine Ausnehmung angeordnet ist, vorzugsweise mindestens zwei Ausnehmungen angeordnet sind, besonders bevorzugt mindestens drei Ausnehmungen angeordnet sind,
und/oder
dass jeder Schneckenflügel mehrere beabstandete Ausnehmungen aufweist und die Ausnehmungen jeweils eine Längserstreckung entlang einer Ausnehmungslängsachse aufweisen, wobei die Ausnehmungslängsachse schräg, insbesondere mit einem Winkel von mindestens 2,5°, vorzugsweise mindestens 10°, zu einer Gewindeverlaufsrichtung des Schneckenflügels ausgerichtet ist, sodass die Ausnehmungslängsachse im Vergleich zu der Gewindeverlaufsrichtung des Schneckenflügels weiter, insbesondere mit einem Winkel von mindestens 5° relativ zur Gewindeverlaufsrichtung, vorzugsweise mindestens 10° relativ zur Gewindeverlaufsrichtung, in Richtung der axialen Richtung ausgerichtet ist.

5. Förderschnecke nach mindestens einem der vorhergehenden Ansprüche,
**dadurch gekennzeichnet, dass** jeder Schneckenflügel mehrere beabstandete Ausnehmungen aufweist und
- die Ausnehmungen jeweils eine Länge in Gewindeverlaufsrichtung des Schneckenflügels und eine Breite in Breitenrichtung des Schneckenflügels aufweisen und die Länge mindestens doppelt so groß ist wie die Breite, wobei vorzugsweise die Länge der Ausnehmungen mindestens halb so lang, vorzugsweise mindestens gleich lang, ist wie der Abstand zwischen den Ausnehmungen,
und/oder
- die Länge der Ausnehmungen und der Abstand zwischen den Ausnehmungen so gewählt sind, dass bei einer vollen Umdrehung der Förderschnecke um die Rotationsachse jeder Punkt einer von dem Außenumfang des Schneckenflügels aufgespannten Rotationsfläche von mindestens einer der Ausnehmungen überstrichen wird,
und/oder
- die Ausnehmungen in Umfangsrichtung auf dem Schneckenflügel in einem gleichmäßigen Abstand zueinander angeordnet sind,
und/oder
- die Ausnehmungen jeweils eine Öffnung in der Außenkante des Schneckenflügels aufweisen, wobei die Öffnung eine Kontur mit mehreren, vorzugsweise mindestens zwei spitzen Winkeln, vorzugsweise mit einem Winkel geringer als 90°, besonders bevorzugt mit einem Winkel geringer als 60°, aufweist.

6. Förderschnecke nach mindestens einem der vorhergehenden Ansprüche,
**dadurch gekennzeichnet, dass** der Schneckenflügel ein Querschnittsprofil mit einer Breite im Bereich des Außenumfangs des Schneckenflügels und einer Breite im Bereich des Innenumfangs des Schneckenflügels aufweist und die Breite im Bereich des Außenumfangs des Schneckenflügels größer ist als die Breite im Bereich des Innenumfangs des Schneckenflügels,
und/oder
dass das Querschnittsprofil des Schneckenflügels mindestens auf einer Seite, vorzugsweise auf beiden Seiten in zumindest einem Abschnitt einen negativen Flankenwinkel aufweist, beispielsweise in Form eines linearen Verlaufs der Querschnittsprofilseite oder in Form eines Verlaufs einer stetigen Funktion wie einer Parabel,
und/oder
dass der Schneckenflügel einen Innendurchmesser und einen Außendurchmesser aufweist und der Schneckenflügel im Bereich des Außendurchmessers breiter als im Bereich des Innendurchmessers ausgebildet ist, wobei vorzugsweise der Schneckenflügel im Bereich des Außendurchmessers mindestens doppelt so breit wie im Bereich des Innendurchmessers ausgebildet ist,
und/oder
dass die Förderschnecke eine Umhüllende aufweist, die sich von einem ersten Ende der Förderschnecke zu einem zweiten Ende der Förderschnecke hin verjüngt, vorzugsweise konisch verjüngt.

7. Separatorvorrichtung zur Entwässerung feuchter Massen, insbesondere Gülle und/oder Gärresten, umfassend
- eine drehbar um eine Antriebsdrehachse gelagerte Antriebswelle (50),
- eine Förderschnecke (10) nach mindestens einem der vorhergehenden Ansprüche, wobei die Förderschnecke mit der Antriebswelle zur Drehmomentübertragung von der Antriebswelle auf die Förderschnecke verbunden ist,
- eine Siebvorrichtung (70), welche mindestens einen Teil der Förderschnecke umschließt, wobei die Siebvorrichtung zur Entwässerung der feuchten Masse eine flüssigkeitsdurchlässige Siebwand aufweist.

8. Separatorvorrichtung nach Anspruch 7 mit einer Förderschnecke nach Anspruch 6,
**dadurch gekennzeichnet, dass** die Siebvorrichtung sich von einem ersten Ende zu einem zweiten Ende erstreckt und eine um die Antriebsdrehachse rotationssymmetrische Innenwand aufweist, deren Innendurchmesser sich von dem ersten Ende zu dem zweiten Ende hin verjüngt, vorzugsweise konisch verjüngt, wobei vorzugsweise die Förderschnecke mittels eine Axialverstellvorrichtung relativ zu der Siebvorrichtung axial verstellbar ist.

9. Verfahren zur Herstellung einer Förderschnecke (100), insbesondere einer Förderschnecke nach mindestens einem der Ansprüche 1-6, umfassend die Schritte:
- Bereitstellen (101) einer Welle, die sich in axialer Richtung entlang einer Rotationsachse erstreckt, vorzugsweise als spanend oder urformend vorgefertigte Welle, wobei die die Welle metallisches Material, vorzugsweise Stahl, insbesondere rostfreien Stahl, umfasst oder daraus besteht,
- additive Fertigung (102) eines Schneckenflügels auf der Welle durch schichtweisen Materialauftrag, umfassend:
∘ Auftragen (102a) einer metallischen Bahn mittels Aufschmelzen eines Metallmaterials, vorzugsweise eines Metalldrahts, wobei die Bahn vorzugsweise entlang einer Gewindeverlaufsrichtung des Schneckenflügels verläuft,
∘ und vorzugsweise Auftragen (102b) weiterer Bahnen, die parallel zu der aufgetragenen Bahn angeordnet sind,
**dadurch gekennzeichnet, dass** der Schneckenflügel derart schichtweise aufgebaut wird, dass der Schneckenflügel an dem Außenumfang des Schneckenflügels mehrere voneinander beabstandete Ausnehmungen zum Aufnehmen von, insbesondere faserhaltigen, Feststoffen aufweist.

10. Verfahren nach dem vorhergehenden Anspruch,
**dadurch gekennzeichnet, dass** der Schneckenflügel derart schichtweise aufgebaut wird, dass der Schneckenflügel ein Querschnittsprofil mit einer Breite im Bereich des Außenumfangs des Schneckenflügels und einer Breite im Bereich des Innenumfangs des Schneckenflügels aufweist und die Breite im Bereich des Außenumfangs des Schneckenflügels größer ist als die Breite im Bereich des Innenumfangs des Schneckenflügels.

11. Verfahren nach mindestens einem der vorhergehenden Ansprüche 9-10, umfassend die Schritte:
- Bestimmen (103) der Höhe einer bereits aufgetragenen Bahn in radialer Richtung,
- Auftragen (104) einer metallischen Bahn mittels Aufschmelzen eines Metallmaterials, vorzugsweise eines Metalldrahts in einer radial über der bereits aufgetragenen Bahn liegenden Schicht, wobei die Positionen an denen das Metallmaterial zum Auftragen dieser Bahn aufgeschmolzen wird in Abhängigkeit von der zuvor bestimmten Höhe der bereits aufgetragenen Bahn eingestellt wird,
- und vorzugsweise Auftragen (105) mehrerer in radialer Richtung übereinander angeordneter Schichten mit jeweils mindestens einer Bahn zur Bildung eines Schichtpakets, bis das Schichtpaket eine Soll-Höhe erreicht und/oder überschreitet, wobei vorzugsweise vor dem Auftragen jeder neuen Schicht die Höhe mindestens einer Bahn der zuvor aufgetragenen Schicht in radialer Richtung bestimmt wird.

12. Verfahren nach mindestens einem der vorhergehenden Ansprüche 9-11,
**dadurch gekennzeichnet, dass** das Bestimmen der Höhe der aufgetragenen Bahn in radialer Richtung mittels folgender Schritte erfolgt:
- Aufsetzen einer Oberfläche eines Schweißkopfes oder eines aus einem Schweißkopf vorstehenden Metalldrahts, der eine bekannte Länge aufweist, auf die Oberfläche der aufgetragenen Bahn, insbesondere durch Erfassung einer Kontaktkraft oder Erfassen einer elektrischen Verbindung zwischen dem Schweißkopf oder dem Metalldraht und der aufgetragenen Bahn,
- Bestimmen der Position der Oberfläche der aufgetragenen Bahn in Abhängigkeit von der Position des Schweißkopfes beim Aufsetzen des Metalldrahts auf die aufgetragene Bahn und gegebenenfalls von der Länge des Metalldrahts,
und/oder dass das Bestimmen der Höhe der aufgetragenen Bahn in radialer Richtung mittels folgender Schritte erfolgt:
- Aufsetzen einer Oberfläche eines Schweißkopfes oder eines aus einem Schweißkopf vorstehenden Metalldrahts, der eine bekannte Länge aufweist, auf eine Referenzebene,
- Auftragen einer metallischen Bahn mittels Abschmelzen des Metalldrahts,
- gegebenenfalls erneutes Aufsetzen des aus dem Schweißkopf vorstehenden Metalldrahts auf die Referenzebene zur Bestimmung der Länge des Metalldrahts,
- Aufsetzen der Oberfläche des Schweißkopfes oder des Metalldrahts auf die Oberfläche der aufgetragenen Bahn und Detektion des Aufsetzens der Oberfläche des Schweißkopfes oder des Metalldrahts auf der Oberfläche, insbesondere durch Erfassung einer Kontaktkraft oder Erfassen einer elektrischen Verbindung zwischen der Oberfläche des Schweißkopfes oder dem Metalldraht und der aufgetragenen Bahn,
- Bestimmen der Position der Oberfläche der aufgetragenen Bahn in Abhängigkeit von der Position des Schweißkopfes beim Aufsetzen der Oberfläche des Schweißkopfes oder des Metalldrahts auf die aufgetragene Bahn und gegebenenfalls von der Länge des Metalldrahts.

13. Verfahren nach mindestens einem der vorhergehenden Ansprüche 9-12,
**dadurch gekennzeichnet, dass** die Herstellung der Förderschnecke mittels drahtbasierter additiver Fertigung mittels Lichtbogenschweißen, insbesondere mittels Metallschutzgasschweißen (MSG), vorzugsweise mittels Metall-Inertgas-Schweißen (MIG) und/oder Metall-Aktivgas-Schweißen (MAG), mittels mindestens eines Schweißroboters erfolgt.

14. Verfahren nach mindestens einem der vorhergehenden Ansprüche 9-13,
das Verfahren umfassend
- Spanendes Abtragen (105) von additiv aufgetragenem Material am Außenumfang des Schneckenflügels zur Verringerung der Rauigkeit des Schneckenflügels am Außenumfangs des Schneckenflügels und/oder zur Erzeugung einer geraden Außenkante am Außenumfang des Schneckenflügels,
- und vorzugsweise spanendes Abtragen (106) von additiv aufgetragenem Material an den Flanken des Schneckenflügels zur Verringerung der Rauigkeit des Schneckenflügels an den Flanken des Schneckenflügels.

15. Verfahren nach mindestens einem der vorhergehenden Ansprüche 9-14,
**dadurch gekennzeichnet, dass** die Welle in einer Halterung eingespannt ist und mittels Bewegung der Halterung bewegbar, insbesondere um die Rotationsachse drehbar, ist,
und/oder
dass der mindestens eine Schweißroboter mindestens zwei vorzugsweise elektromechanisch angetriebene Achsen aufweist.

16. Verfahren nach mindestens einem der vorhergehenden Ansprüche 9-15,
**dadurch gekennzeichnet,**
**dass** der schichtweise Aufbau des Schneckenflügels mittels Auftrag von parallel angeordneten Bahnen erfolgt, wobei die Bahnen entlang der Gewindeverlaufsrichtung des Schneckenflügels verlaufen, wobei vorzugsweise ein Teil der Bahnen entlang des gesamten Schneckenflügels jeweils durchgängig ausgebildet ist und/oder ein Teil der Bahnen jeweils im Bereich der Ausnehmungen Unterbrechungen aufweist und nicht entlang des gesamten Schneckenflügels durchgängig ausgebildet ist und/oder durch den Verlauf der Bahnen eine Ausnehmung gebildet wird,
und/oder
**dass** die Anzahl der parallel verlaufenden Bahnen einer Schicht im Bereich des Innendurchmessers des Schneckenflügels geringer ist als die Anzahl der parallel verlaufenden Bahnen einer Schicht im Bereich des Außendurchmessers des Schneckenflügels.

17. Verfahren nach mindestens einem der vorhergehenden Ansprüche 9-16, umfassend
- Erstellen von Produktionsdaten für die Positionierung des Abschmelzens des Metalldrahts beim Aufbringen der Bahn, umfassend die Schritte:
∘ Erstellen einer digitalen Grundstruktur, die Querschnittsinformationen, insbesondere umfassend eine Soll-Höhe und eine von der Höhe abhängige Breite, eines Schneckenflügels abbildet,
∘ Replizieren der digitalen Grundstruktur in einer vorgegebenen Gewindebewegung, die der Gewindeform des Schneckenflügels entspricht.

18. Verwendung einer Förderschnecke nach mindestens einem der Ansprüche 1-6, in einer Separatorvorrichtung, vorzugsweise einer Separatorvorrichtung nach Anspruch 7, zur Entwässerung feuchter Massen, insbesondere zur Entwässerung von Gärresten und/oder Gülle.

## Claims

1. Screw conveyor (10), in particular for a separator device (200) for dewatering moist masses, comprising
- a shaft (11), which extends in axial direction along an axis of rotation (300) and which is preferably not manufactured in an additive manufacturing process, wherein the shaft comprises or consists of metallic material, preferably steel, in particular stainless steel,
- a screw flight (20, 30), which
∘ is arranged helically around the shaft,
∘ is connected to the shaft at the outer circumference of the shaft,
∘ and extends in an axial direction along at least a portion of the shaft,
**characterized in that** the screw flight is a metallic structure additively manufactured on the shaft and has, on the outer circumference, an outer edge, in which a plurality of recesses spaced from each other for receiving fibrous materials are arranged,
wherein the recesses are formed in the screw flight by interrupting the material application in the area of the recesses during the layer-by-layer application of metallic paths.

2. Screw conveyor according to the preceding claim,
**characterized in**
**that** the screw flight is produced by wire-based additive manufacturing by means of arc welding, in particular by means of gas metal arc welding (GMAW), preferably by means of metal inert gas welding (MIG) and/or metal active gas welding (MAG).

3. Screw conveyor according to at least one of the preceding claims,
**characterized in that** the screw flight is built up in layers obtained by:
- Applying of several metallic paths by means of melting off a metal wire, wherein the paths are preferably arranged parallel to one another and run along the thread running direction of the screw flight.

4. Screw conveyor according to at least one of the preceding claims,
**characterized in that** the screw conveyor has several, preferably two, screw flights (20, 30), which are arranged offset from one another in the circumferential direction, in particular offset from one another by 180°, and are preferably of uniform design,
wherein preferably each of the screw flights has a plurality of recesses in circumferential direction and the recesses of one screw flight are offset in axial direction from the recesses of another screw flight,
and/or
that in the screw flight in circumferential direction within an angular range of 360° at least one recess is arranged, preferably at least two recesses are arranged, particularly preferably at least three recesses are arranged,
and/or
**in that** each screw flight has several spaced recesses and the recesses each have a longitudinal extension along a recess longitudinal axis, wherein the recess longitudinal axis being oriented obliquely, in particular at an angle of at least 2.5°, preferably at least 10°, relative to a thread running direction of the screw flight, so that compared to the thread running direction of the screw flight the recess longitudinal axis is oriented further, in particular at an angle of at least 5° relative to the thread running direction, preferably at least 10° relative to the thread running direction, in direction of the axial direction.

5. Screw conveyor according to at least one of the preceding claims,
**characterized in that** each screw flight has several spaced recesses and
- the recesses each have a length in the thread running direction of the screw flight and a width in the width direction of the screw flight, and the length is at least twice as great as the width, wherein preferably the length of the recesses is at least half as long, preferably at least as long, as the distance between the recesses,
and/or
- the length of the recesses and the distance between the recesses are selected such that, during one full rotation of the screw conveyor about the axis of rotation, each point of a surface of rotation spanned by the outer circumference of the screw flight is swept by at least one of the recesses,
and/or
- the recesses are arranged at a uniform distance from each other in the circumferential direction on the screw flight,
and/or
- the recesses each have an opening in the outer edge of the screw flight, wherein the opening has a contour with several, preferably at least two, acute angles, preferably with an angle less than 90°, particularly preferably with an angle less than 60°.

6. Screw conveyor according to at least one of the preceding claims,
**characterized in that** the screw flight has a cross-sectional profile with a width in the region of the outer circumference of the screw flight and a width in the region of the inner circumference of the screw flight, and the width in the region of the outer circumference of the screw flight is greater than the width in the region of the inner circumference of the screw flight,
and/or
that the cross-sectional profile of the screw flight has a negative flank angle on at least one side, preferably on both sides in at least one section, for example in the form of a linear course of the cross-sectional profile side or in the form of a course of a continuous function such as a parabola,
and/or
**in that** the screw flight has an inner diameter and an outer diameter and the screw flight is formed wider in the region of the outer diameter than in the region of the inner diameter, wherein preferably the screw flight is formed at least twice as wide in the region of the outer diameter as in the region of the inner diameter,
and/or
that the screw conveyor has an envelope which tapers, preferably conically tapers, from a first end of the screw conveyor to a second end of the screw conveyor.

7. Separator device for dewatering moist masses, in particular liquid manure and/or digestates, comprising
- a drive shaft (50) rotatably mounted about a drive axis of rotation,
- a screw conveyor (10) according to at least one of the preceding claims, wherein the screw conveyor is connected to the drive shaft for torque transmission from the drive shaft to the screw conveyor,
- a screening device (70) which encloses at least part of the screw conveyor, wherein the screening device has a liquid-permeable screen wall for dewatering the moist mass.

8. Separator device according to claim 7 with a screw conveyor according to claim 6,
**characterized in that** the screening device extends from a first end to a second end and has an inner wall which is rotationally symmetrical about the drive axis of rotation, whose inner diameter tapers, preferably conically tapers, from the first end to the second end, wherein preferably the screw conveyor is axially adjustable relative to the screening device by means of an axial adjustment device.

9. A method of manufacturing a screw conveyor (100), in particular a screw conveyor according to at least one of claims 1-6, comprising the steps:
- **Providing** (101) a shaft, which extends in axial direction along an axis of rotation, preferably as machined or mastershaped preformed shaft, wherein the shaft comprises or consists of metallic material, preferably steel, in particular stainless steel,
- additive manufacturing (102) of a screw flight on the shaft by layer-by-layer material deposition, comprising:
∘ Applying (102a) a metallic path by means of melting a metal material, preferably a metal wire, wherein the path preferably extends along a thread running direction of the screw flight,
∘ and preferably Applying (102b) further paths, which are arranged parallel to the applied path,
**characterized in that** the screw flight is built up in layers in such a way that the screw flight has, on the outer circumference of the screw flight, several recesses spaced apart from one another for receiving, in particular fiber-containing, solids.

10. Method according to the preceding claim,
**characterized in that** the screw flight is built up in layers in such a way that the screw flight has a cross-sectional profile with a width in the region of the outer circumference of the screw flight and a width in the region of the inner circumference of the screw flight and the width in the region of the outer circumference of the screw flight is greater than the width in the region of the inner circumference of the screw flight.

11. Method according to at least one of the preceding claims 9-10, comprising the steps:
- Determining (103) the height of an already applied path in radial direction,
- Applying (104) a metallic path by means of melting a metal material, preferably a metal wire, in a layer lying radially above the already applied path, wherein the positions at which the metal material is melted off for application of this path is set in dependence of the previously determined height of the already applied path,
- and preferably Applying (105) several layers arranged one above the other in radial direction, each having at least one path, to form a layer stack until the layer stack reaches and/or exceeds a nominal height, wherein preferably before the application of each new layer the height of at least one path of the previously applied in radial direction is determined.

12. Method according to at least one of the preceding claims 9-11,
**characterized in that** the determination of the height of the applied path in radial direction is performed by means of the following steps:
- Placing a surface of a welding head or a metal wire protruding from a welding head, which has a known length, on the surface of the applied path, in particular by detecting a contact force or detecting an electrical connection between the welding head or the metal wire and the applied path,
- Determining the position of the surface of the deposited path in dependence of the position of the welding head when placing the metal wire on the applied path and, if necessary, of the length of the metal wire,
and/or that the determination of the height of the applied path in radial direction is performed by means of the following steps:
- Placing a surface of a welding head or a metal wire protruding from a welding head, which has a known length, on a reference plane,
- Applying of a metallic path by means of melting the metal wire,
- If necessary, again placing the metal wire protruding from the welding head on the reference plane for determination the length of the metal wire,
- Placing the surface of the welding head or the metal wire on the surface of the applied path and detection of the placement of the surface of the welding head or the metal wire on the surface, in particular by detecting a contact force or detecting an electrical connection between the surface of the welding head or the metal wire and the applied path,
- Determining the position of the surface of the applied path in dependence of the position of the welding head during placing of the surface of the welding head or the metal wire on the applied path and, if necessary, on the length of the metal wire.

13. Method according to at least one of the preceding claims 9-12,
**characterized in that** the manufacturing of the screw conveyor takes place by wire-based additive manufacturing by means of arc welding, in particular by means of metal inert gas welding (MIG), preferably by means of metal inert gas welding (MIG) and/or metal active gas welding (MAG), by means of at least one welding robot.

14. Method according to at least one of the preceding claims 9-13,
the method comprising
- Chip removal (105) of additively applied material at the outer circumference of the screw flight for reduction of the roughness of the screw flight at the outer circumference of the screw flight and/or for production of a straight outer edge at the outer circumference of the screw flight,
- and preferably chip removal (106) of additively applied material on the flanks of the screw flight for reduction of the roughness of the screw flight on the flanks of the screw flight.

15. Method according to at least one of the preceding claims 9-14,
**characterized in that** the shaft is clamped in a holder and is movable, in particular rotatable about the axis of rotation, by means of movement of the holder,
and/or
that the at least one welding robot has at least two preferably electromechanically driven axes.

16. Method according to at least one of the preceding claims 9-15,
**characterized in that**
**in that** the layered buildup of the screw flight is carried out by means of application of paths arranged in parallel, wherein the paths run along the thread direction of the screw flight, wherein preferably a part of the paths is formed continuously along the entire screw flight in each case and/or a part of the paths has interruptions each case in the region of the recesses and is not formed continuously along the entire screw flight and/or a recess is formed by the course of the paths,
and/or
that the number of parallel paths in the area of the inner diameter of the screw flight is less than the number of parallel paths in the area of the outer diameter of the screw flight.

17. Method according to at least one of the preceding claims 9-16, comprising
- Creating production data for the positioning of the melting off of the metal wire when applying the path, comprising the steps:
∘ Creating of a digital basic structure mapping cross-sectional information, in particular comprising a nominal height and a width dependent on the height, of a screw flight,
∘ Replicating the digital basic structure in a predetermined threading motion that corresponds to the thread shape of the screw flight.

18. Use of a screw conveyor according to at least one of claims 1-6, in a separator device, preferably a separator device according to claim 7, for dewatering moist masses, in particular for dewatering digestates and/or liquid manure.

## Revendications

1. Vis sans fin (10), en particulier pour un dispositif séparateur (200) pour la déshydratation de masses humides, comprenant
- un arbre (11) qui s'étend dans une direction axiale le long d'un axe de rotation (300) et de qui, de préférence, n'est pas fabriqué dans un procédé de fabrication additive, dans laquelle l'arbre comprend un matériau métallique, de préférence de l'acier, en particulier de l'acier inoxydable,
- une aile de vis (20, 30), qui
∘ est disposée en hélice autour de l'arbre,
∘ est reliée à l'arbre sur la périphérie extérieure de l'arbre,
∘ et s'étend dans la direction axiale le long d'au moins une section de l'arbre,
**caractérisée en ce que** l'aile de vis est une structure métallique produite par fabrication additive sur l'arbre et présente, sur la périphérie extérieure, un bord extérieur dans lequel sont ménagés plusieurs évidements espacés les uns des autres pour recevoir des matières fibreuses,
dans laquelle les évidements sont formés dans l'aile de vis en interrompant l'application de matériau lors de l'application par couches de bandes métalliques dans la zone des évidements.

2. Vis sans fin selon la revendication précédente,
**caractérisée en ce**
**que** l'aile de vis est fabriquée par une fabrication additive à base de fil par soudage à l'arc, en particulier par soudage sous gaz de protection avec métal d'apport (MSG), de préférence par soudage sous gaz inerte avec métal d'apport (MIG) et/ou par soudage sous gaz actif avec métal d'apport (MAG).

3. Vis sans fin selon au moins l'une quelconque des revendications précédentes,
**caractérisée en ce que** l'aile de vis est élaborée en couches, obtenues par :
- application de plusieurs bandes métalliques par fusion d'un fil métallique, dans laquelle les bandes sont de préférence disposées parallèlement les unes aux autres et s'étendent le long de la direction d'extension de filetage de l'aile de vis.

4. Vis sans fin selon au moins l'une quelconque des revendications précédentes,
**caractérisée en ce que** la vis sans fin présente plusieurs, de préférence deux, ailes de vis (20, 30), qui sont disposées de manière décalée l'une par rapport à l'autre dans la direction périphérique, en particulier de manière décalée de 180° l'une par rapport à l'autre, et qui sont de préférence réalisées de manière uniforme,
dans laquelle, de préférence, chacune des ailes de vis présente une multitude d'évidements dans la direction périphérique et les évidements d'une aile de vis sont disposés de manière décalée dans la direction axiale par rapport aux évidements d'une autre aile de vis,
et/ou
qu'au moins un évidement, de préférence au moins deux évidements, de manière particulièrement préférée au moins trois évidements, sont disposés dans l'aile de vis dans la direction périphérique dans une plage angulaire de 360°,
et/ou
que chaque aile de vis présente plusieurs évidements espacés et que les évidements présentent respectivement une extension longitudinale le long d'un axe longitudinal d'évidement, dans laquelle l'axe longitudinal d'évidement est orienté de manière oblique, en particulier avec un angle d'au moins 2,5°, de préférence d'au moins 10°, par rapport à une direction d'extension de filetage de l'aile de vis, si bien que l'axe longitudinal d'évidement continue, en comparaison avec la direction d'extension de filetage de l'aile de vis, à être orienté en direction de la direction axiale en particulier avec un angle d'au moins 5° par rapport à la direction d'extension de filetage, de préférence d'au moins 10° par rapport à la direction d'extension de filetage.

5. Vis sans fin selon au moins l'une quelconque des revendications précédentes,
**caractérisée en ce que** chaque aile de vis présente plusieurs évidements espacés et
- les évidements présentent respectivement une longueur dans la direction d'extension de filetage de l'aile de vis et une largeur dans la direction de la largeur de l'aile de vis et la longueur est au moins deux fois plus grande que la largeur, dans laquelle de préférence la longueur des évidements est de préférence au moins la moitié de, de préférence au moins égale à, la distance entre les évidements,
et/ou
- la longueur des évidements et la distance entre les évidements sont choisies de telle sorte que, en cas de rotation complète de la vis sans fin autour de l'axe de rotation, chaque point d'une surface de rotation serrée par la périphérie extérieure de l'aile de vis est couvert par au moins un des évidements,
et/ou
- les évidements sont disposés à distance égale les uns par rapport aux autres dans la direction périphérique sur l'aile de vis,
et/ou
- les évidements présentent respectivement une ouverture dans le bord extérieur de l'aile de vis, dans laquelle l'ouverture présente un contour avec plusieurs, de préférence au moins, deux angles pointus, de préférence avec un angle inférieur à 90°, de manière particulièrement préférée avec un angle inférieur à 60°.

6. Vis sans fin selon au moins l'une quelconque des revendications précédentes,
**caractérisée en ce que** l'aile de vis présente un profil de section transversale avec une largeur dans la zone de la périphérie extérieure de l'aile de vis et avec une largeur dans la zone de la périphérie intérieure de l'aile de vis et la largeur dans la zone de la périphérie extérieure de l'aile de vis est supérieure à la largeur dans la zone de la périphérie intérieure de l'aile de vis,
et/ou
que le profil de section transversale de l'aile de vis présente un angle de flanc négatif au moins sur un côté, de préférence sur les deux côtés dans au moins une section, par exemple sous la forme d'une extension linéaire du côté de profil de section transversale ou sous la forme d'une extension d'une fonction continue comme une parabole,
et/ou
que l'aile de vis présente un diamètre intérieur et un diamètre extérieur et l'aile de vis est réalisée dans la zone du diamètre extérieur plus large que dans la zone du diamètre intérieur, dans laquelle de préférence l'aile de vis est réalisée dans la zone du diamètre extérieur de manière à être au moins deux fois plus large que dans la zone du diamètre intérieur,
et/ou
que la vis sans fin présente un enveloppement qui se rétrécit, de préférence de manière conique, depuis une première extrémité de la vis sans fin vers une seconde extrémité de la vis sans fin.

7. Dispositif séparateur pour la déshydratation de masses humides, en particulier de lisier et/ou de résidus de fermentation, comprenant
- un arbre d'entraînement (50) monté de manière à pouvoir tourner autour d'un axe de rotation d'entraînement,
- une vis sans fin (10) selon au moins l'une des revendications précédentes, dans lequel la vis sans fin est reliée à l'arbre d'entraînement pour la transmission de couple de rotation de l'arbre d'entraînement sur la vis sans fin,
- un dispositif de tamisage (70) qui entoure au moins une partie de la vis sans fin, dans lequel le dispositif de tamisage pour la déshydratation de la masse humide présente une paroi de tamisage perméable aux liquides.

8. Dispositif séparateur selon la revendication 7 avec une vis sans fin selon la revendication 6,
**caractérisé en ce que** le dispositif de tamisage s'étend depuis une première extrémité à une deuxième extrémité et présente une paroi intérieure symétrique en rotation autour de l'axe de rotation d'entraînement, dont le diamètre intérieur se rétrécit, de préférence se rétrécit de manière conique, depuis la première extrémité vers la deuxième extrémité, dans lequel de préférence la vis sans fin peut être ajustée axialement par rapport au dispositif de tamisage au moyen d'un dispositif d'ajustement axial.

9. Procédé de fabrication d'une vis sans fin (100), en particulier d'une vis sans fin selon au moins l'une quelconque des revendications 1 à 6, comprenant les étapes :
- de mise à disposition (101) d'un arbre qui s'étend dans une direction axiale le long d'un axe de rotation, de préférence en tant qu'arbre préfabriqué par usinage ou par façonnage primaire, dans lequel l'arbre comprend ou est constitué d'un matériau métallique, de préférence d'acier, en particulier d'acier inoxydable,
- de fabrication additive (102) d'une aile de vis sur l'arbre par application de matériau par couches, comprenant :
∘ l'application (102a) d'une bande métallique par fusion d'un matériau métallique, de préférence d'un fil métallique, dans lequel la bande s'étend de préférence le long d'une direction d'extension de filetage de l'aile de vis,
∘ et de préférence l'application (102b) d'autres bandes qui sont disposées de manière parallèle à la bande appliquée,
**caractérisé en ce que** l'aile de vis est élaborée en couches de telle manière que l'aile de vis présente, sur la périphérie extérieure de l'aile de vis, plusieurs évidements espacés les uns des autres pour la réception de matières solides, en particulier contenant des fibres.

10. Procédé selon la revendication précédente,
**caractérisé en ce que** l'aile de vis est élaborée en couches de telle manière que l'aile de vis présente un profil de section transversale avec une largeur dans la zone de la périphérie extérieure de l'aile de vis et avec une largeur dans la zone de la périphérie intérieure de l'aile de vis et la largeur dans la zone de la périphérie extérieure de l'aile de vis est supérieure à la largeur dans la zone de la périphérie intérieure de l'aile de vis.

11. Procédé selon au moins l'une quelconque des revendications précédentes 9 à 10, comprenant les étapes :
- de détermination (103) de la hauteur d'une piste déjà appliquée dans la direction radiale,
- d'application (104) d'une bande métallique par fusion d'un matériau métallique, de préférence d'un fil métallique dans une couche située radialement au-dessus de la bande déjà appliquée, dans lequel les positions sur lesquelles le matériau métallique est fondu pour l'application de cette bande sont réglées en fonction de la hauteur préalablement déterminée de la bande déjà appliquée,
- et de préférence l'application (105) de plusieurs couches disposées les unes au-dessus des autres dans la direction radiale avec respectivement au moins une bande pour former un paquet de couches jusqu'à ce que le paquet de couches atteigne et/ou dépasse une hauteur théorique, dans lequel, de préférence avant l'application de chaque nouvelle couche, la hauteur d'au moins une bande de la couche préalablement appliquée est déterminée dans la direction radiale.

12. Dispositif selon au moins l'une quelconque des revendications précédentes 9 à 11,
**caractérisé en ce que** la détermination de la hauteur de la bande appliquée dans la direction radiale s'effectue au moyen d'étapes suivantes :
- la pose d'une surface d'une tête de soudure ou d'un fil métallique dépassant d'une tête de soudure, qui présente une longueur connue, sur la surface de la bande appliquée, en particulier par détection d'une force de contact ou détection d'une liaison électrique entre la tête de soudure ou le fil métallique et la bande appliquée,
- la détermination de la position de la surface de la bande appliquée en fonction de la position de la tête de soudure lors de la pose du fil métallique sur la bande appliquée et, le cas échéant, de la longueur du fil métallique,
et/ou que la détermination de la hauteur de la bande appliquée dans la direction radiale s'effectue au moyen d'étapes suivantes :
- la pose d'une surface d'une tête de soudure ou d'un fil métallique dépassant d'une tête de soudure, qui présente une longueur connue, sur un plan de référence,
- d'application d'une bande métallique par fusion du fil métallique,
- le cas échéant, le repositionnement du fil métallique dépassant de la tête de soudure sur le plan de référence pour déterminer la longueur du fil métallique,
- la pose de la surface de la tête de soudure ou du fil métallique sur la surface de la bande appliquée et la détection de la pose de la surface de la tête de soudure ou du fil métallique sur la surface, en particulier par détection d'une force de contact ou par détection d'une liaison électrique entre la surface de la tête de soudure ou du fil métallique et la bande appliquée,
- la détermination de la position de la surface de la bande appliquée en fonction de la position de la tête de soudure lors de la pose de la surface de la tête de soudure ou du fil métallique sur la bande appliquée et le cas échéant de la longueur du fil métallique.

13. Procédé selon au moins l'une quelconque des revendications précédentes 9 à 12,
**caractérisé en ce que** la fabrication de la vis sans fin par fabrication additive à base de fils par soudage à l'arc, en particulier par soudage sous gaz de protection avec métal d'apport (MSG), de préférence par soudage sous gaz inerte avec métal d'apport (MIG) et/ou par soudage sous gaz actif avec métal d'apport (MAG), s'effectue au moyen d'au moins un robot de soudage.

14. Dispositif selon au moins l'une quelconque des revendications précédentes 9 à 13,
le procédé comprenant
- l'enlèvement de copeaux (105) du matériau appliqué de manière additive sur la périphérie extérieure de l'aile de vis pour réduire la rugosité de l'aile de vis sur la périphérie extérieure de l'aile de vis et/ou pour créer un bord extérieur droit sur la périphérie extérieure de l'aile de vis,
- et de préférence l'enlèvement de copeaux (106) du matériau appliqué de manière additive sur les flancs de l'aile de vis pour réduire la rugosité de l'aile de vis sur les flancs de l'aile de vis.

15. Procédé selon au moins l'une quelconque des revendications précédentes 9 à 14,
**caractérisé en ce que** l'arbre est serré dans un support et peut être déplacé par déplacement du support, en particulier peut être tourné autour de l'axe de rotation,
et/ou
que l'au moins un robot de soudage présente au moins deux axes entraînés de préférence de manière électromécanique.

16. Dispositif selon au moins l'une quelconque des revendications précédentes 9 à 15,
**caractérisé en ce**
**que** la structure par couches de l'aile de vis se fait par application de bandes disposées de manière parallèle, dans lequel les bandes s'étendent le long de la direction d'extension de filetage de l'aile de vis, dans lequel, de préférence, une partie des bandes est formée respectivement de manière continue le long de la totalité de l'aile de vis et/ou une partie des bandes présente respectivement des interruptions dans la zone des évidements et n'est pas réalisée de manière continue le long de la totalité de l'aile de vis et/ou un évidement est formé par l'extension des bandes,
et/ou
**que** le nombre de bandes s'étendant de manière parallèle d'une couche dans la zone du diamètre intérieur de l'aile de vis est inférieur au nombre des bandes s'étendant de manière parallèle d'une couche dans la zone du diamètre extérieur de l'aile de vis.

17. Procédé selon au moins l'une quelconque des revendications précédentes 9 à 16, comprenant
- la création de données de production pour le positionnement de la fusion du fil métallique lors de l'application de la bande, comprenant les étapes :
∘ de création d'une structure de base numérique qui représente des informations de section transversale, comprenant en particulier une hauteur théorique et une largeur dépendant de la hauteur, d'une aile de vis,
∘ de réplication de la structure de base numérique dans un mouvement de filetage prédéfini, qui correspond à la forme de filetage de l'aile de vis.

18. Utilisation d'une vis sans fin selon au moins l'une quelconque des revendications 1 à 6, dans un dispositif séparateur, de préférence un dispositif séparateur selon la revendication 7, pour la déshydratation de masses humides, en particulier pour la déshydratation de résidus de fermentation et/ou de lisier.
